# EUROPEAN PATENT APPLICATION

(11) **EP 4 807 215 A1**
(43) Date of publication of application: **16.09.2026**
(21) Application number: 24949692.8
(22) Date of filing: 01.08.2024
(51) Int. Cl.: F16H 9/18, B21D 39/00

(54) **SHEAVE FOR CONTINUOUSLY VARIABLE TRANSMISSION, CONTINUOUSLY VARIABLE TRANSMISSION, SADDLE-TYPE VEHICLE, AND METHOD FOR MANUFACTURING SHEAVE FOR CONTINUOUSLY VARIABLE TRANSMISSION**

(71) Applicant: Yamaha Hatsudoki Kabushiki Kaisha, Iwata-shi, Shizuoka 438-8501 (JP)
(72) Inventor: TAKATOO, Masashi, Iwata-shi, Shizuoka 438-8501 (JP)
(74) Representative: Grünecker Patent- und Rechtsanwälte PartG mbB
(86) International application number: PCT/JP2024/027604
(87) International publication number: WO 2026/028408

(57) **Abstract**

A sheave for a continuously variable transmission **(100)** includes: a boss member **(110)** being made of a first metal material; and a sheave member **(120)** that is made of a second metal material which is a different kind from the first metal material, the sheave member **(120)** including a sheave surface **(121)** and a rear surface **(122).** The sheave member is mounted on an attachment region **(AR)** being a part of an outer peripheral surface (**110os**) of the boss member **(110)** via plastic flow coupling. The attachment region has a stepped shape that includes a first region **(R1)** having a relatively small diameter, a second region **(R2)** having a relatively large diameter, and a step surface **(SS1)** located at a boundary between the first region and the second region. The first region, the step surface, and the second region are disposed in this order from the sheave surface side toward the rear surface side, and the sheave member abuts with the step surface.

## Description

### TECHNICAL FIELD

The present invention relates to a sheave for a continuously variable transmission, a continuously variable transmission, a straddled vehicle, and a production method of a sheave for a continuously variable transmission.

### BACKGROUND ART

Belt-type continuously variable transmissions are widely used in scooter-type motorcycles and the like. A belt-type continuously variable transmission includes a drive pulley, a driven pulley, and a belt strung between them. The drive pulley is composed of a fixed sheave secured to a crankshaft of the engine and a movable sheave positioned opposite the fixed sheave and capable of moving in the axial direction of the crankshaft.

While a method that utilizes the centrifugal force acting on centrifugal weights (known as the "centrifugal method") is generally used to move the movable sheave, in recent years, a method using electric actuators (known as the electronic control method") has also been proposed. A continuously variable transmission that employs the electronic control method for moving the movable sheave is disclosed, for example, in Patent Document 1.

### CITATION LIST

### PATENT LITERATURE

[Patent Document 1] Japanese Laid-Open Patent Publication No. 2018-66434

### SUMMARY OF INVENTION

### TECHNICAL PROBLEM

A movable sheave must meet a wide range of performance requirements, including high strength and rigidity, as well as excellent heat-releasing ability. In order to improve the performance of a movable sheave, the inventor has investigated the possibility of composing a movable sheave from multiple components that are made of different kinds of metal materials. By adopting such a construction, appropriate materials as desired can be provided respectively at different sites of the movable sheave, whereby the performance of the movable sheave can presumably be improved.

However, while various specific structures and methods are possible for combining components made of different kinds of materials and for joining them securely, it has been found that, depending on the structure or method adopted, manufacturing can become complicated, positional accuracy during joining may be low, or the layout may become enlarged, as will be described later.

Embodiments of the present invention have been made in view of the above problem, and an objective thereof is to provide a suitable structure and production method for composing a movable sheave for a continuously variable transmission, from multiple components that are made of different kinds of materials.

### SOLUTION TO PROBLEM

The present specification discloses sheaves for continuously variable transmissions, continuously variable transmissions, straddled vehicles, and production methods of sheaves for continuously variable transmissions, as recited in the following Items.

### [Item 1]

A sheave for a continuously variable transmission, comprising:
a boss member being made of a first metal material and having a boss hole; and
a sheave member that is made of a second metal material which is a different kind from the first metal material, the sheave member including a sheave surface to receive a belt and a rear surface that is located on an opposite side to the sheave surface, wherein:
   the sheave member is mounted on an attachment region being a part of the outer peripheral surface of the boss member via plastic flow coupling;
   the attachment region has a stepped shape that includes a first region having a relatively small diameter, a second region having a relatively large diameter, and a step surface located at a boundary between the first region and the second region; and
   the first region, the step surface and the second region are disposed in this order from the sheave surface side toward the rear surface side, and the sheave member abuts with the step surface.

In the sheave for a continuously variable transmission according to an embodiment of the present invention, because the boss member and the sheave member are made of different kinds of metal materials from each other, appropriate materials as desired can be provided respectively at different sites (specifically, the site that has the boss hole and the site that has the sheave surface to receive the belt) of the sheave. Because the sheave member is mounted to the attachment region being a part of the outer peripheral surface of the boss member via plastic flow coupling, even though the sheave member and the boss member are made of different kinds of metal materials from each other, joining can be achieved relatively simply, with a high positional accuracy, and compactly (i.e., without causing a layout enlargement).

Moreover, in the sheave for a continuously variable transmission according to the embodiment of the present invention, the attachment region being a part of the outer peripheral surface of the boss member has a stepped shape that includes a first region having a relatively small diameter, a second region having a relatively large diameter, and a step surface located at a boundary between the first region and the second region. The first region, the step surface, and the second region are disposed in this order from the sheave surface side toward the rear surface side, such that the sheave member abuts with the step surface. Therefore, disengagement of the sheave member that may be caused by a force applied by the belt during the operation of the continuously variable transmission is prevented. In other words, the step surface serves as a disengagement prevention for the sheave member.

### [Item 2]

The sheave for a continuously variable transmission of Item 1, wherein:
the first region of the attachment region of the boss member has a plurality of grooves; and
the sheave member has a plurality of projecting ribs fitting in the plurality of grooves.

In the sheave for a continuously variable transmission according to an embodiment of the present invention, for example, the first region of the attachment region of the boss member has a plurality of grooves, and the sheave member has a plurality of projecting ribs that fit in these grooves, whereby mechanical joining is achieved. The projecting ribs of the sheave member may be formed, when the sheave member is mounted to the boss member, as the sheave member abuts with the step surface of the boss member to undergo plastic deformation (or more specifically, as the metal material of the sheave member undergoes plastic flow and flows into the grooves of the boss member).

### [Item 3]

The sheave for a continuously variable transmission of Item 2, wherein a gap is provided between a bottom of each of the plurality of grooves and a top of a projecting rib fitting in the groove.

From the standpoint of preventing cracking of the sheave member during plastic flow coupling, it is preferable that a gap is provided between the bottom of each groove and the top of a projecting rib fitting in that groove. If plastic flow coupling is effected in such a manner that no gaps exist between the bottoms of the grooves and the tops of the projecting ribs, the amount of plastic deformation of the metal material of the sheave member needs to be sufficiently large, in which case cracking of the sheave member may occur. By effecting plastic flow coupling so that gaps are provided between the bottoms of the grooves and the tops of the projecting ribs, cracking of the sheave member can be restrained.

### [Item 4]

The sheave for a continuously variable transmission of Item 2 or 3, wherein the plurality of grooves include two first grooves extending along a circumferential direction of the boss member and a plurality of second grooves being located between the two first grooves and extending along an axial direction of the boss member.

It is preferable that the plurality of grooves of the boss member include two first grooves extending along the circumferential direction and a plurality of second grooves being located between the two first grooves and extending along the axial direction of the boss member. Because the projecting ribs of the sheave member fit in the first grooves extending along the circumferential direction, disengagement of the sheave member is restrained. Moreover, because the projecting ribs of the sheave member fit in the second grooves extending along the axial direction of the boss member, rotation (twisting) of the sheave member with respect to the boss member is restrained.

### [Item 5]

The sheave for a continuously variable transmission of Item 4, wherein a length of each of the plurality of second grooves is 3 mm or greater.

Within the attachment region of the boss member, the portion where the plurality of grooves are formed is the "joining portion" that actually contributes to joining. As the length of the second grooves increases, the length of the joining portion along the axial direction of the boss hole (which may be called the "fitting length") also increases to provide an improved joint strength, whereby tilting of the sheave member caused by a force applied by the belt can be restrained. Moreover, as the length of the second grooves increases, the meshing area between the boss member and the sheave member becomes larger, thus achieving an enhanced effect of restraining the rotation of the sheave member with respect to the boss member and an improved heat-releasing ability of the sheave member. Specifically, it is preferable that the length of the second grooves is 3 mm or greater.

### [Item 6]

The sheave for a continuously variable transmission of Item 4 or 5, wherein a depth of each of the plurality of second grooves is 2 mm or smaller.

If the depth of the second grooves is too large, the amount of plastic deformation of the metal material of the sheave member needs to be large, in which case cracking of the sheave member may be of concern. From the standpoint of restraining cracking of the sheave member, it is preferable that the depth of the second grooves is 2 mm or smaller.

### [Item 7]

The sheave for a continuously variable transmission of any of Items 4 to 6, wherein a ratio of the length to the depth of each of the plurality of second grooves is 5 or greater.

From the standpoint of increasing the length of the joining portion and the standpoint of increasing the meshing area between the boss member and the sheave member, it is preferable that a ratio of the length to the depth of the second grooves is 5 or greater.

### [Item 8]

The sheave for a continuously variable transmission of any of Items 4 to 7, wherein:
the plurality of second grooves are disposed so that essentially no interspace exists between two adjacent second grooves; and
a peak portion that is defined between the two adjacent second grooves has a radius of curvature of 0.5 mm or smaller.

When the plurality of second grooves are disposed so that essentially no interspace exists between two adjacent second grooves, it is preferable that a peak portion that is defined between the two adjacent second grooves has a radius of curvature of 0.5 mm or smaller. As a result, the geometric area of the joining interface can be increased to provide an improved strength of joining.

### [Item 9]

The sheave for a continuously variable transmission of any of Items 4 to 8, wherein a tilting angle of a side surface of each of the plurality of second grooves with respect to a depth direction is not less than 30° and not more than 60°.

It is preferable that a tilting angle of the side surfaces of the second grooves with respect to the depth direction is not less than 30° and not more than 60°. This can further facilitate plastic flow the metal material of the sheave member, and restrain cracking of the sheave member.

### [Item 10]

The sheave for a continuously variable transmission of any of Items 4 to 9, wherein a bottom of each of the plurality of second grooves has a radius of curvature of 0.5 mm or smaller.

It is preferable that the bottoms of the second grooves have a radius of curvature of 0.5 mm or smaller. As a result, the geometric area of the joining interface can be increased to provide an improved strength of joining.

### [Item 11]

The sheave for a continuously variable transmission of any of Items 4 to 10, wherein a depth of each of the plurality of first grooves is 2 mm or smaller.

From the standpoint of restraining cracking of the sheave member, it is preferable that the depth of the first grooves is 2 mm or smaller. Note that, from the standpoint of preventing disengagement of the sheave member, it is preferable that the depth of the first grooves is 0.5 mm or greater.

### [Item 12]

The sheave for a continuously variable transmission of any of Items 2 to 11, wherein:
an inner peripheral surface of the boss member includes a spline region in which spline structures are formed;
a joining portion is defined as a region of the attachment region where the plurality of grooves are formed; and
clearance regarding an axial direction of the boss member is provided between the joining portion and the spline region.

The inner peripheral surface of the boss member may include a spline region in which spline structures for spline coupling with a shaft member that is allowed to extend through the boss hole are formed. It is preferable that a clearance regarding the axial direction of the boss member is provided between the joining portion which is a region of the attachment region where the plurality of grooves are formed, and the spline region. When the sheave member becomes mounted to the boss member via plastic flow coupling, a force to constrict inwardly along radial directions may act on the joining portion of the boss member. Axial clearance being provided between the joining portion and the spline region makes it easy to ensure slidability of the boss member with respect to the shaft member.

### [Item 13]

The sheave for a continuously variable transmission of Item 12, wherein:
the spline region includes a first spline portion having a first spline minor diameter and a second spline portion having a second spline minor diameter which is greater than the first spline minor diameter; and
the second spline portion is disposed closer to the joining portion than is the first spline portion.

By adopting a construction where the spline region includes the first spline portion having a first spline minor diameter and the second spline portion having a second spline minor diameter which is greater than the first spline minor diameter, the second spline portion being disposed closer to the joining portion than is the first spline portion, it becomes even easier to ensure slidability of the boss member with respect to the shaft member.

### [Item 14]

The sheave for a continuously variable transmission of any of Items 2 to 13, wherein:
the first region of the attachment region includes a first press-fit portion in which the sheave member is press-fitted;
the second region of the attachment region includes a second press-fit portion in which the sheave member is press-fitted; and
a length of the second press-fit portion along an axial direction of the boss member is greater than a length of the first press-fit portion along the axial direction of the boss member.

From the standpoint of restraining the tilt of the sheave member that may be caused by a force applied by the belt, it is preferable that the length of the second press-fit portion included in the second region of the attachment region is larger than the length of the first press-fit portion included in the first region of the attachment region.

### [Item 15]

The sheave for a continuously variable transmission of any of Items 1 to 14, wherein the rear surface of the sheave member includes a plurality of fins.

When the rear surface of the sheave member includes a plurality of fins, a further improvement of heat-releasing ability can be achieved.

### [Item 16]

The sheave for a continuously variable transmission of any of Items 1 to 15, wherein:
the first metal material is an iron alloy; and
the second metal material is an aluminum alloy.

By using an iron alloy as the first metal material and an aluminum alloy as the second metal material, an improved heat-releasing ability and light weight of the sheave member can be achieved while providing sufficient strength and rigidity for the boss member.

### [Item 17]

A continuously variable transmission comprising:
a rotation shaft; and
a movable sheave supported by the rotation shaft so as to be capable of sliding along an axial direction of the rotation shaft, wherein
the movable sheave is the sheave for a continuously variable transmission of any of Items 1 to 16.

### [Item 18]

A straddled vehicle comprising the continuously variable transmission of Item 17.

### [Item 19]

A production method of a sheave for a continuously variable transmission, comprising:
step (A) of providing a boss member being made of a first metal material and having a boss hole;
step (B) of providing a sheave member that is made of a second metal material which is a different kind from the first metal material, the sheave member including a sheave surface to receive a belt and a rear surface that is located on an opposite side to the sheave surface; and
step (C) of mounting the sheave member to an attachment region being a part of an outer peripheral surface of the boss member via plastic flow coupling, wherein:
   a direction being parallel to an axial direction of the boss member and going from one end to another end of the boss member is defined as a first direction;
   step (C) is carried out by pressurizing the sheave member and/or the boss member to cause a relative movement of the sheave member with respect to the boss member in the first direction;
   the attachment region of the boss member has a stepped shape that includes a first region having a relatively small diameter, a second region having a relatively large diameter, and a step surface located at a boundary between the first region and the second region;
   the first region, the step surface and the second region are disposed in this order along the first direction; and,
   in step (C), a part of the sheave member abuts with the step surface of the boss member to undergo plastic deformation, whereby the plastic flow coupling is effected.

In the production method of a sheave for a continuously variable transmission according to an embodiment of the present invention, because a boss member and a sheave member that are made of different kinds of metal materials from each other are provided, appropriate materials as desired can be provided respectively at different sites (specifically, the site that has the boss hole and the site that has the sheave surface to receive the belt) of the sheave. Because the sheave member is mounted to the attachment region being a part of the outer peripheral surface of the boss member via plastic flow coupling, even though the sheave member and the boss member are made of different kinds of metal materials from each other, joining can be achieved relatively simply, with a high positional accuracy, and compactly (i.e., without causing a layout enlargement).

Moreover, in the production method according to the embodiment of the present invention, the attachment region being a part of the outer peripheral surface of the boss member has a stepped shape that includes the first region having a relatively small diameter, the second region having a relatively large diameter, and the step surface located at the boundary between the first region and the second region, such that the first region, the step surface and the second region are disposed in this order along the direction of relative movement (first direction) of the sheave member in step (C). Furthermore, in step (C), a part of the sheave member abuts with the step surface of the boss member to undergo plastic deformation, whereby plastic flow coupling is effected. Because the sheave member abuts with the step surface of the boss member even in a completed state of the sheave, disengagement of the sheave member that may be caused by a force applied by the belt during the operation of the continuously variable transmission is prevented. In other words, not only does the step surface cause plastic deformation of the sheave member during plastic flow coupling, but it also serves as a disengagement prevention for the sheave member in the resultant sheave.

### [Item 20]

The production method of Item 19, wherein:
the first region of the attachment region of the boss member has a plurality of grooves; and
in step (C), a plurality of projecting ribs to fit in the plurality of grooves are formed in the sheave member.

In the production method according to an embodiment of the present invention, for example, the first region of the attachment region of the boss member has a plurality of grooves, and in step (C), a plurality of projecting ribs to fit in the plurality of grooves are formed in the sheave member thereby effecting mechanical joining. The plurality of projecting ribs of the sheave member are formed as the sheave member abuts with the step surface of the boss member, causing the sheave member to undergo plastic deformation (or more specifically, causing the metal material of the sheave member to undergo plastic flow and flow into the grooves of the boss member).

### [Item 21]

The production method of Item 19 or 20, wherein:
in step (C), given an intrusion length L being defined as an amount of relative movement of the sheave member from a point in time at which a part of the sheave member makes initial contact with the step surface to a point in time at which the relative movement of the sheave member with respect to the boss member is completed, and
given a step height D being defined as a radial length of the step surface,
a ratio L/D of the intrusion length L to the step height D is 1.9 or greater.

As the length (i.e., length along the axial direction of the boss hole) of the portion of the attachment region of the boss member that actually contributes to joining (i.e., joining portion) increases, the joint strength becomes more improved. From the standpoint of suitably causing a plastic flow of the metal material of the sheave member throughout an entire joining portion having a large length along the axial direction, it is preferable that a ratio L/D of the intrusion length L to the step height D is 1.9 or greater.

### [Item 22]

The production method of any of Items 19 to 21, wherein:
step (C) is carried out by, while the boss member is supported by a first supporting fixture, pressurizing the sheave member in the first direction with a pressurizing fixture; and
in step (C), as the pressurizing fixture abuts with the first supporting fixture, movement of the sheave member is completed.

Step (C) is carried out by, for example, while the boss member is supported by the first supporting fixture, by pressurizing the sheave member in the first direction with the pressurizing fixture. In that case, it is preferable that, during step (C), movement of the sheave member is completed as the pressurizing fixture abuts with the first supporting fixture. This makes it easy to maintain a constant amount of movement (intrusion length L) of the sheave member.

### [Item 23]

The production method of Item 22, wherein step (C) is carried out while the rear surface of the sheave member is elastically supported by a second supporting fixture.

It is preferable that step (C) is carried out while the rear surface of the sheave member is elastically supported by the second supporting fixture. As a result, unintended deformation of the sheave member can be restrained.

### [Item 24]

The production method of any of Items 19 to 23, wherein step (C) is carried out while a center alignment fixture is placed so as to abut with both of an inner peripheral surface of the boss member and an inner peripheral surface of the sheave member.

It is preferable that step (C) is carried out while a center alignment fixture is placed so as to abut with both of an inner peripheral surface of the boss member and an inner peripheral surface of the sheave member As a result, it is easily ensured that the axis center of the boss member coincides with the axis center of the sheave member.

### ADVANTAGEOUS EFFECTS OF INVENTION

According to embodiments of the present invention, there can be provided a suitable structure and production method for composing a movable sheave for a continuously variable transmission, from multiple components that are made of different kinds of materials.

### BRIEF DESCRIPTION OF DRAWINGS

[FIG. **1**] A left side view schematically showing a motorcycle **1** according to an embodiment of the present invention.
[FIG. **2**] A horizontal cross-sectional view schematically showing an engine unit **8** included in the motorcycle **1**.
[FIG. **3**] An enlarged view showing a primary pulley **41** and a sheave driving mechanism **44** of a continuously variable transmission **15** included in the engine unit **8**.
[FIG. **4**] An enlarged view showing the primary pulley **41** and the sheave driving mechanism **44**.
[FIG. **5**] An enlarged view showing a secondary pulley **42** and a centrifugal clutch **45** of the continuously variable transmission **15**.
[FIG. **6**] An enlarged view showing the secondary pulley **42** and the centrifugal clutch **45**.
[FIG. **7**] A cross-sectional view schematically showing a sheave (first movable sheave) **100** of the primary pulley **41**.
[FIG. **8**] A side view schematically showing the sheave **100**, depicting the sheave **100** from the outer side of the axial direction.
[FIG. **9**] A side view schematically showing the sheave **100**, depicting the sheave **100** from the inner side of the axial direction.
[FIG. **10**] A cross-sectional view showing enlarged an attachment region **AR** and its neighborhood.
[FIG. **11**] A perspective view showing a plurality of grooves **112** of a boss member **110** and their neighborhood.
[FIG. **12A**] A cross-sectional view showing a boss member **110** to be provided in a first preparation step.
[FIG. **12B**] A side view showing the boss member **110** to be provided in the first preparation step, depicting the boss member **110** from the outer side of the axial direction.
[FIG. **12C**] A side view showing the boss member **110** to be provided in the first preparation step, depicting the boss member **110** from the inner side of the axial direction.
[FIG. **13A**] A cross-sectional view showing a sheave member **120** to be provided in a second preparation step.
[FIG. **13B**] A side view showing the sheave member **120** to be provided in the second preparation step, depicting the sheave member **120** from the outer side of the axial direction.
[FIG. **13C**] A side view showing the sheave member **120** to be provided in the second preparation step, depicting the sheave member **120** from the inner side of the axial direction.
[FIG. **14**] A diagram showing an example implementation of a mounting step.
[FIG. **15**] A diagram with: an upper portion showing a relative positioning between the sheave member **120** and the boss member **110** at a time T1 when the second step surface **SS2** of the sheave member **120** makes initial contact with the first step surface **SS1** of the boss member **110**; and a lower portion showing a relative positioning between the sheave member **120** and the boss member **110** at a time T2 when the relative movement of the sheave member **120** with respect to the boss member **110** is completed.
[FIG. **16A**] A cross-sectional view showing enlarged grooves **112** and projecting ribs **124** fitting therein, showing a cross section orthogonal to the direction in which first grooves **112A** extend.
[FIG. **16B**] A cross-sectional view showing enlarged grooves **112** and projecting ribs **124** fitting therein, showing a cross section orthogonal to the direction in which second grooves **112B** extend.
[FIG. **17**] A cross-sectional view schematically showing the sheave **100**.
[FIG. **18A**] A diagram for describing a specific example of a production method for the sheave **100**.
[FIG. **18B**] A diagram for describing a specific example of a production method for the sheave **100**.

### DESCRIPTION OF EMBODIMENTS

Hereinafter, an embodiment of the present invention will be described with reference to the drawings. Although a motorcycle will be illustrated as a straddled vehicle according to an embodiment of the present invention, straddled vehicles according to embodiments of the present invention are not limited to motorcycles.

### [construction of motorcycle and engine unit]

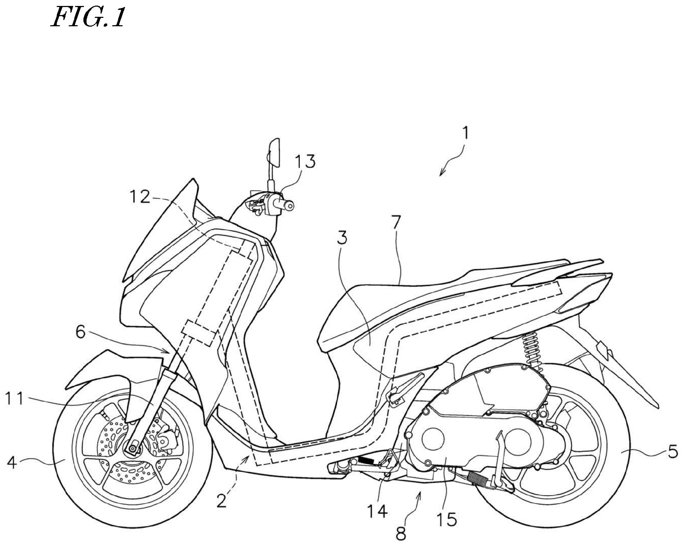

With reference to FIG. **1**, a motorcycle **1** according to an embodiment of the present invention will be described. FIG. **1** is a left side view showing the motorcycle **1**. The motorcycle **1** shown in FIG. **1** is a scooter-type motorcycle **1**. Note that the motorcycle according to the embodiment of the present invention is not limited to the scooter-type motorcycle **1**, but may be a street type, off-road type, moped type, or the like.

In the following description, "front", "rear", "right", and "left" respectively mean the front, rear, right, and left as viewed from a rider on the motorcycle **1**. Herein, "up/above" and "down/below" respectively mean up/above and down/below while the motorcycle **1** is stopped on the horizontal plane.

As shown in FIG. **1**, the motorcycle **1** includes a body frame **2**, a body cover **3**, a front wheel **4**, a rear wheel **5**, a steering device **6**, a seat **7**, and an engine unit **8**.

The body cover **3** covers the body frame **2**. The steering device **6** is supported by the body frame **2** so as to be capable of pivoting right and left. The steering device **6** includes front forks **11**, a steering shaft **12**, and a handle bar member **13**.

The front forks **11** support the front wheel **4** so as to permit rotation thereof. The steering shaft **12** is connected to the front forks **11**. The steering shaft **12** is supported by the body frame **2** so as to be capable of pivoting right and left. The handle bar member **13** is connected to the steering shaft **12**.

The seat **7** is disposed rearward of the handle bar member **13**. The engine unit **8** is disposed below the seat **7**. The engine unit **8** is supported by the body frame **2** so as to be capable of swinging up and down. The engine unit **8** supports the rear wheel **5** so as to be permit rotation thereof. The engine unit **8** includes an engine **14** and a continuously variable transmission **15**.

The continuously variable transmission **15** is disposed on a side of the engine **14**. The continuously variable transmission **15** transmits driving force from the engine **14** to the rear wheel **5**.

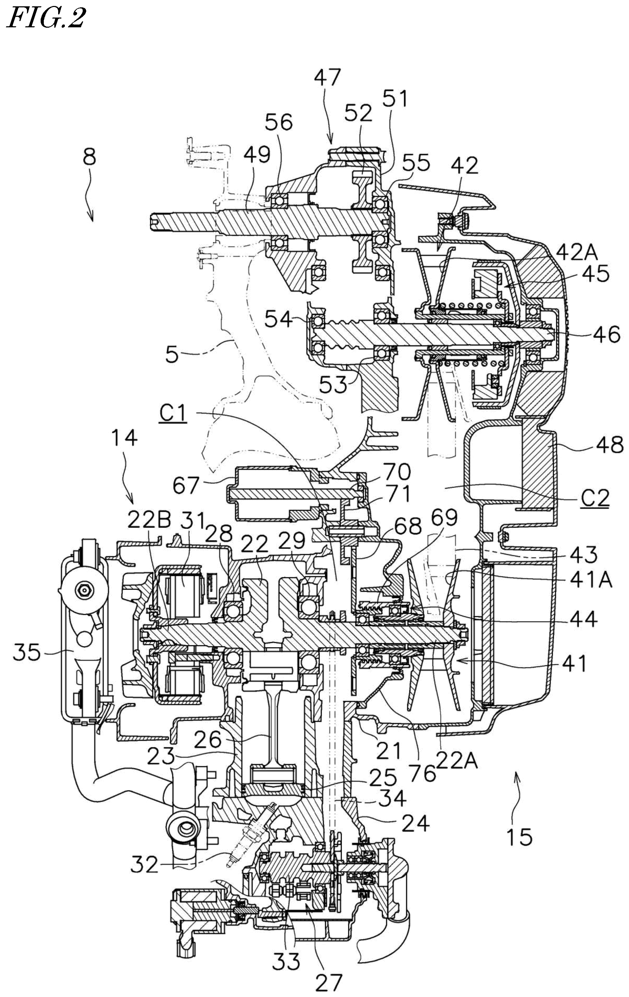

FIG. **2** is a horizontal cross-sectional view schematically showing the engine unit **8**. As shown in FIG. **2**, the engine **14** includes a crankcase **21**, a crankshaft **22**, a cylinder body **23**, a cylinder head **24**, a piston **25**, a connecting rod **26**, and a valve moving mechanism **27**.

The crankshaft **22** is accommodated in the crankcase **21**. Via bearings **28** and **29,** the crankshaft **22** is supported by the crankcase **21** so as to be capable of rotating. The crankshaft **22** includes a first shaft end **22A** and a second shaft end **22B**. At the first shaft end **22A**, the continuously variable transmission **15** is connected. An electric generator **31** is connected at the second shaft end **22B**.

The cylinder body **23** is connected to the crankcase **21**. The cylinder head **24** is connected to the cylinder body **23**. The connecting rod **26** and the piston **25** are disposed in the cylinder body **23**. Via the connecting rod **26**, the piston **25** is connected to the crankshaft **22**. An ignition device **32** is mounted to the cylinder head **24**. The valve moving mechanism **27** includes a camshaft **33**. A cam chain **34** is wound around the camshaft **33** and the crankshaft **22**. As the rotation of the crankshaft **22** is transmitted to the camshaft **33** via the cam chain **34**, the camshaft **33** rotates. As a result, intake valves and exhaust valves (not shown) of the engine **14** are driven by the valve moving mechanism **27**.

The continuously variable transmission **15** is electrically controlled to change the transmission ratio in response to a command signal from a controller not shown. In other words, the continuously variable transmission **15** is a transmission of the electronic control type.

As shown in FIG. **2**, the continuously variable transmission **15** includes the crankshaft **22**, a primary pulley **41**, a secondary pulley **42**, a belt **43**, a sheave driving mechanism **44**, a centrifugal clutch **45**, an output shaft **46**, a speed reducer **47**, and a transmission case **48**.

The primary pulley **41** is connected to the crankshaft **22**. The primary pulley **41** includes a V-shaped first groove **41A**. Via a wheel shaft **49**, the secondary pulley **42** is connected to the rear wheel **5**. The secondary pulley **42** includes a V-shaped second groove **42A**.

The belt **43** is wound around the primary pulley **41** and the secondary pulley **42**. The belt 43 has a trapezoidal cross section in accordance with the shapes of the first groove **41A** and the second groove **42A**. The secondary pulley **42** is connected to the output shaft **46** via the centrifugal clutch **45**. The output shaft **46** is connected to the wheel shaft **49** via the speed reducer **47**. Via bearings **53** and **54,** the output shaft **46** is supported by a speed reducer case **51** (described later) so as to be capable of rotating. Via bearings **55** and **56,** the wheel shaft **49** is supported by the speed reducer case **51** so as to be capable of rotating.

The speed reducer **47** includes a speed reducer case **51** and a gear **52**. The speed reducer case **51** accommodates the gear **52**. The gear **52** transmits rotation of the output shaft **46** to the wheel shaft **49**. Note that only one gear **52** among the plurality of gears of the speed reducer **47** in FIG. **2**, while the other gears are omitted.

From the axial direction, the transmission case **48** covers the primary pulley **41**, the secondary pulley **42**, the belt **43**, the centrifugal clutch **45**, and the output shaft **46**.

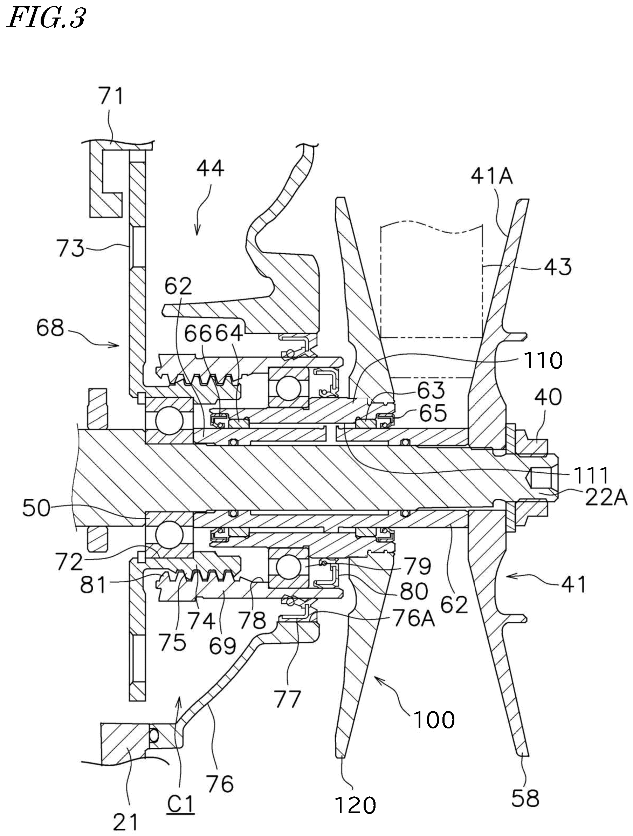

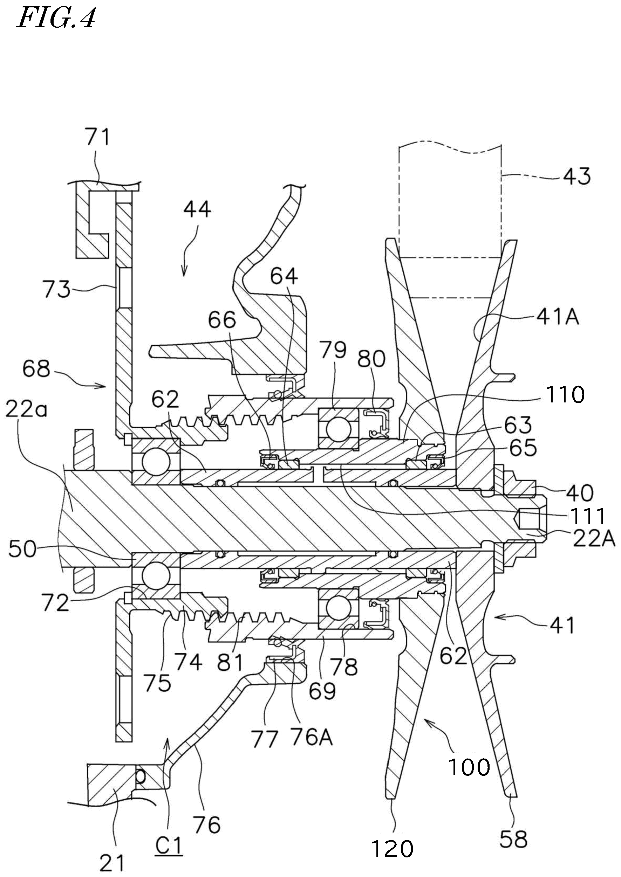

FIG. **3** and FIG. **4** are enlarged views showing the primary pulley **41** and the sheave driving mechanism **44**. The primary pulley **41** includes a first movable sheave **100** and a first fixed sheave **58**, as shown in FIG. **3** and FIG. **4**.

The first movable sheave **100** is supported so as to be capable of moving relative to the crankshaft **22** along the axial direction of the crankshaft **22** (which is hereinafter simply referred to as the axial direction). The first movable sheave **100** is disposed on the inner side of the axial direction (i.e., the left side in FIG. **3**) relative to the first fixed sheave **58**.

The first movable sheave **100** is supported so as to be incapable of rotating with respect to the crankshaft **22** along the circumferential direction of the crankshaft **22**. The first movable sheave **100** is fixed to the crankshaft **22** via splining. The first movable sheave **100** rotates integrally with the crankshaft **22**.

The first movable sheave **100** includes a first sheave member **120** and a first boss member **110**. The first sheave member **120** is disposed facing the first fixed sheave **58**. The first sheave member **120** is fixed to an outer peripheral surface of the first boss member **110**. Between the first sheave member **120** and the first fixed sheave **58**, the first groove **41A** is provided. The first boss member **110** extends along the axial direction from the first sheave member **120**. The first boss member **110** includes a first boss hole **111**. The first boss hole **111** extends along the axial direction. The crankshaft **22** extends through the first boss hole **111**.

The crankshaft **22** includes an outer shaft **62**. The outer shaft **62** is mounted to an outer peripheral surface of the first shaft end **22A**. The first movable sheave **100** is fixed to the outer shaft **62** via splining. The outer shaft **62** extends through the first boss hole **111**. A first bushing **63** and a second bushing **64** are press-fitted into the first boss hole **111**. The first bushing **63** and the second bushing **64** are made of a slidable material. The first bushing **63** and the second bushing **64** are disposed between an inner peripheral surface of the first boss hole **111** and an outer peripheral surface of the outer shaft **62**. As the first movable sheave **100** moves along the axial direction, the first bushing **63** and the second bushing **64** slide relative to the outer shaft **62** along the axial direction. The interior of the first boss hole **111** is filled with a lubricant such as grease. The interspace between the first boss member **110** and the outer shaft **62** is sealed by oil seals **65** and **66**.

The first fixed sheave **58** is fixed to the crankshaft **22**. The first fixed sheave **58** is fixed to the crankshaft **22** with a nut **40**. The first fixed sheave **58** is fixed to the crankshaft **22** so as to be incapable of moving along the axial direction. The first fixed sheave **58** is fixed to the crankshaft **22** so as to be incapable of rotating with respect to the crankshaft **22**. The first fixed sheave **58** rotates integrally with the crankshaft **22**.

The sheave driving mechanism **44** causes the first movable sheave **100** to move along the axial direction. As shown in FIG. **2**, the sheave driving mechanism **44** includes an electric actuator **67**, a first driving member **68**, and a second driving member **69**.

The electric actuator **67** is an electric motor, for example. The electric actuator **67** may be an actuator other than an electric motor. The electric actuator **67** includes a rotation shaft **70**. The rotation shaft **70** is connected to the first driving member **68** via a gear **71**. Rotation of the rotation shaft **70** is transmitted to the first driving member **68** via the gear **71**.

As shown in FIG. **3** and FIG. **4**, the first driving member **68** includes a first hole **72**. The first hole **72** extends through the first driving member **68** along the axial direction. The crankshaft **22** is passed through the first hole **72**. Via a bearing **50**, the first driving member **68** is supported by the crankshaft **22**. The first driving member **68** is supported so as to be capable of rotating with respect to the crankshaft **22**. The first driving member **68** is supported so as to be incapable of moving relative to the crankshaft **22** along the axial direction.

The first driving member **68** includes a gear portion **73** and a feed screw portion **74**. From the feed screw portion **74,** the gear portion **73** extends along a radial direction of the crankshaft **22**. The gear portion **73** meshes with the gear **71**. Rotation of the rotation shaft **70** of the electric actuator **67** is transmitted to the gear portion **73** via the gear **71**. As a result of this, the first driving member **68** rotates. The feed screw portion **74** extends along the axial direction from the gear portion **73**. A first thread **75** is provided on an outer peripheral surface of the feed screw portion **74**.

On the crankcase **21**, a crankcase cover **76** is mounted. The crankcase cover **76** includes an aperture **76A**. The aperture **76A** is disposed facing the primary pulley **41**. The second driving member **69** extends through the aperture **76A** of the crankcase **21**. The interspace between the second driving member **69** and the crankcase cover **76** is sealed by an oil seal **77**.

The second driving member **69** includes a second hole **78**. The second hole **78** extends through the second driving member **69** along the axial direction. The crankshaft **22** and the first boss member **110** extend through the second hole **78**.

Via a bearing **79**, the second driving member **69** is supported by the first boss member **110**. The second driving member **69** is supported so as to be capable of rotating with respect to the first boss member **110**. The second driving member **69** is supported so as to be incapable of moving relative to the first boss member **110** along the axial direction. The second driving member **69** moves integrally with the first movable sheave **100** along the axial direction. The interspace between the second driving member **69** and the first boss member **110** is sealed by an oil seal **80**. A second thread **81** is provided on an inner peripheral surface of the second driving member **69**. The second thread **81** meshes with the first thread **75**. As the first driving member **68** rotates, as shown in FIG. **4**, the second driving member **69** moves along the axial direction. As a result of this, the first movable sheave **100** moves along the axial direction.

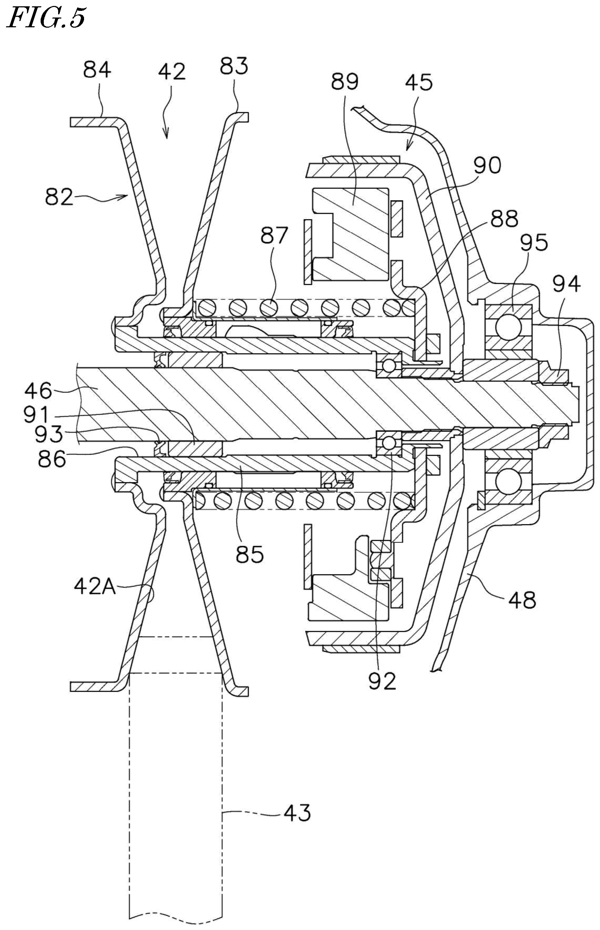

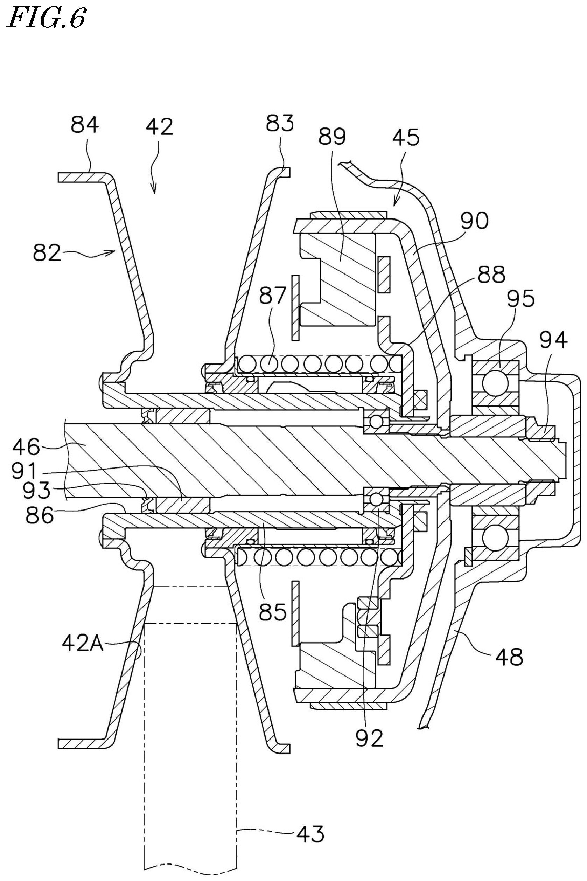

FIG. **5** and FIG. **6** are enlarged views showing the secondary pulley **42** and the centrifugal clutch **45**. As shown in FIG. **5** and FIG. **6**, the secondary pulley **42** includes a second fixed sheave **82** and a second movable sheave **83**. The second fixed sheave **82** is supported so as to be capable of rotating with respect to the output shaft **46**. The second fixed sheave **82** is supported so as to be incapable of moving relative to the output shaft **46** along the axial direction.

The second fixed sheave **82** includes a second sheave member **84** and a second boss member **85**. The second sheave member **84** is disposed facing the second movable sheave **83**. Between the second sheave member **84** and the second movable sheave **83,** a second groove **42A** is provided. The second boss member **85** extends along the axial direction from the second sheave member **84**. The second boss member **85** includes a second boss hole **86**. The second boss hole **86** extends through the second boss member **85** along the axial direction.

Via a bearing **95**, the output shaft **46** is supported by the transmission case **48** so as to be capable of rotating. The output shaft **46** extends through the second boss hole **86**. A bushing **91** is press-fitted into the second boss hole **86**. The bushing **91** is made of a slidable material. The bushing **91** is disposed between an inner peripheral surface of the second boss hole **86** and an outer peripheral surface of the output shaft **46**.

By the bushing **91** and the bearing **92**, the second boss member **85** is supported so as to be capable of rotating with respect to the output shaft **46**. The interior of the second boss hole **86** is filled with a lubricant such as grease. The interspace between the second boss member **85** and the output shaft **46** is sealed by an oil seal **93**.

The second movable sheave **83** is disposed on the outer side of the axial direction (i.e., the right side in FIG. **5**) relative to the second fixed sheave **82**. The second movable sheave **83** is supported so as to be incapable of rotating with respect to the second boss member **85**. The second movable sheave **83** rotates integrally with the second fixed sheave **82**. The second movable sheave **83** is supported so as to be capable of moving relative to the second boss member **85** along the axial direction. For example, the second movable sheave **83** is fixed to the second boss member **85** via splining. A spring **87** is disposed between the second movable sheave **83** and the centrifugal clutch **45**. The spring **87** loads the second movable sheave **83** toward the second fixed sheave **82**.

When the vehicle speed is smaller than a predetermined engagement speed, the centrifugal clutch **45** is in a non-engaged state where the continuously variable transmission **15** is decoupled from the rear wheel **5**, as shown in FIG. **5**. When the vehicle speed is equal to or greater than the engagement speed, the centrifugal clutch **45** is in an engaged state where the continuously variable transmission **15** is coupled to the rear wheel **5**, as shown in FIG. **6**.

The centrifugal clutch **45** includes a drive plate **88**, a clutch shoe **89**, and a clutch outer **90**. The drive plate **88** is fixed to the second boss member **85**. The drive plate **88** rotates integrally with the second boss member **85**.

The clutch shoe **89** is connected to the drive plate **88**. The clutch shoe **89** rotates integrally with the drive plate **88**. The clutch shoe **89** is supported so as to be capable of moving relative to the drive plate **88** along radial directions. The clutch shoe **89** is loaded toward the inner side of radial directions by a clutch spring not shown.

Via a nut **94**, the clutch outer **90** is fixed to the output shaft **46**. The clutch outer **90** rotates integrally with the output shaft **46**. The clutch outer **90** covers the clutch shoe **89** regarding radial directions.

When the vehicle speed is smaller than the predetermined engagement speed, the loading force of the clutch spring keeps the clutch shoe **89** away from the clutch outer **90**. Therefore, the centrifugal clutch **45** is in a non-engaged state, such that rotation of the secondary pulley **42** is not transmitted to the output shaft **46**. When the vehicle speed is equal to or greater than the engagement speed, the clutch shoe **89** moves toward the outer side of radial directions due to centrifugal force, against the loading force of the clutch spring. As a result, the clutch shoe **89** comes in contact with the clutch outer **90**, placing the centrifugal clutch **45** in an engaged state. While the centrifugal clutch **45** is in an engaged state, rotation of the secondary pulley **42** is transmitted to the output shaft **46** via the drive plate **88,** the clutch shoe **89,** and the clutch outer **90**.

With the continuously variable transmission **15** having the above-described construction, when the vehicle speed is equal to or greater than the engagement speed, the centrifugal clutch **45** is in an engaged state. As a result, the rotation of the crankshaft **22** is transmitted to the rear wheel **5,** via the primary pulley **41**, the belt **43**, the secondary pulley **42**, the centrifugal clutch **45**, the output shaft **46**, the speed reducer **47**, and the wheel shaft **49**. This causes the motorcycle **1** to travel.

Moreover, by moving the first movable sheave **100** with the use of the sheave driving mechanism **44**, the transmission ratio of the continuously variable transmission **15** is electrically controlled. Note that the transmission ratio of the continuously variable transmission **15** means a ratio of the rotational speed of the crankshaft **22** to the rotational speed of the output shaft **46**.

Specifically, as the first driving member **68** rotates in a certain direction with the use of the electric actuator **67**, as shown in FIG. **4**, the second driving member **69** moves toward the outer side of the axial direction. As a result, together with the second driving member **69**, the first movable sheave **100** moves toward the outer side of the axial direction. As the first movable sheave **100** moves toward the outer side of the axial direction, the width of the first groove **41A** between the first movable sheave **100** and the first fixed sheave **58** becomes smaller. As a result, the diameter of a portion of the belt **43** that is wound around the primary pulley **41** (hereinafter referred to as the first winding diameter) becomes larger. As the first winding diameter becomes larger, the diameter of a portion of the belt **43** that is wound around the secondary pulley **42** (hereinafter referred to as the second winding diameter) becomes smaller. As a result, the transmission ratio becomes smaller. In this case, as shown in FIG. **6**, the second movable sheave **83** moves toward the outer side of the axial direction against the loading force of the spring **87**, whereby the width of the second groove **42A** becomes larger.

As the electric actuator **67** causes the first driving member **68** to rotate in the opposite direction, as shown in FIG. **4**, the second driving member **69** moves toward the inner side of the axial direction. As a result, together with the second driving member **69**, the first movable sheave **100** moves toward the inner side of the axial direction. As the first movable sheave **100** moves toward the inner side of the axial direction, the width of the first groove **41A** between the first movable sheave **100** and the first fixed sheave **58** becomes larger. As a result, the first winding diameter becomes smaller. As the first winding diameter becomes smaller, the second winding diameter becomes larger. As a result, the transmission ratio becomes larger. In this case, as shown in FIG. **5**, the second movable sheave **83** moves toward the inner side of the axial direction because of the loading force of the spring **87**, whereby the width of the second groove **42A** becomes smaller.

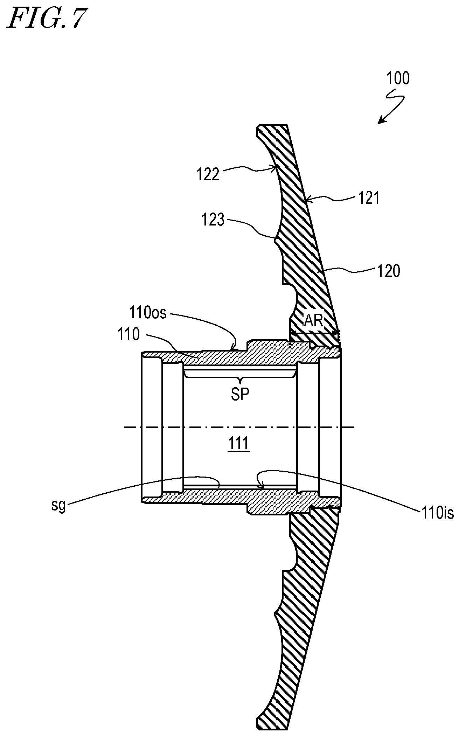

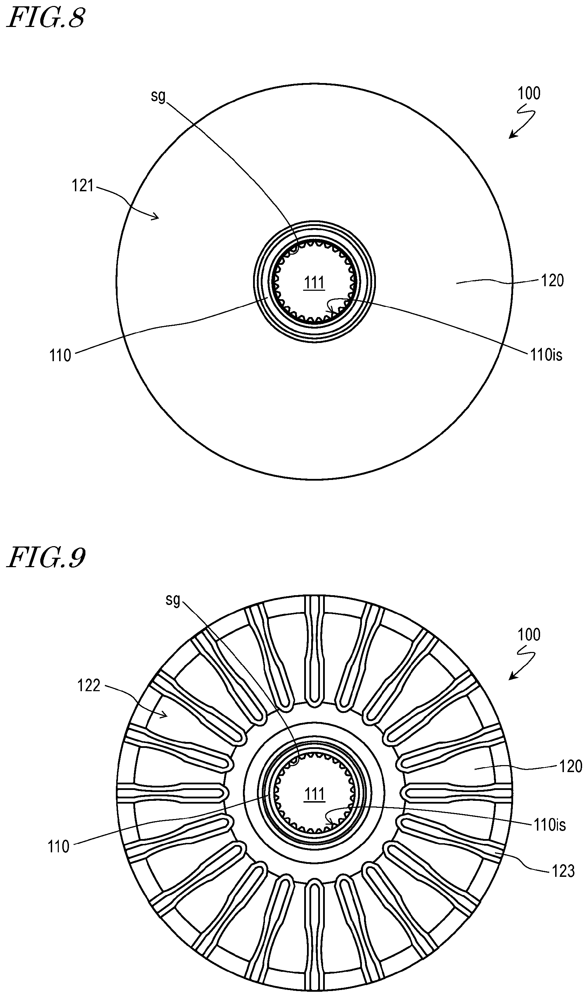

Next, with reference to FIG. **7**, FIG. **8**, and FIG. **9**, the structure of the first movable sheave **100** of the primary pulley **41** will be described more specifically. As can be seen from what has already been described, the first movable sheave **100** is supported by the crankshaft **22** so as to be capable of sliding along the axial direction of the crankshaft (rotation shaft) **22**. In the following description, the first movable sheave **100** will be simply referred to as the "sheave". FIG. **7** is a cross-sectional view showing the sheave **100**, and FIG. **8** and FIG. **9** are side views schematically showing the sheave **100**. FIG. **8** is a diagram depicting the sheave **100** from the outer side of the axial direction, whereas FIG. **9** is a diagram depicting the sheave **100** from the inner side of the axial direction.

As shown in FIG. **7**, FIG. **8**, and FIG. **9**, the sheave **100** includes the first boss member (simply referred to as the "boss member") **110** and the first sheave member (simply referred to as the "sheave member") **120**.

The boss member **110** and the sheave member **120** are made of different kinds of metal materials from each other. The materials of the boss member **110** and the sheave member **120** may each be a pure metal or an alloy. In the present specification, by saying that metal materials are of "the same kind", it is meant that the metal materials have the same main component element (i.e., a metallic element that is contained in the largest quantity); by saying that metal materials are of "different kinds", it is meant that the main component elements of the metal materials are different. For example, pure aluminum and an aluminum alloy are metal materials of the same kind, and a carbon steel and a stainless steel are metal materials of the same kind. On the other hand, an aluminum alloy and a stainless steel are different kinds of metal materials. In the following description, the metal material composing the boss member **110** may be referred to as the "first metal material", and the metal material composing the sheave member **120** referred to as the "second metal material". In the present embodiment, as the second metal material, a material that is more liable to plastic deformation than the first metal material (i.e., softer than the first metal material) is used. In other words, as the first metal material, a material that is less liable to plastic deformation than the second metal material (i.e., harder than the second metal material) is used.

The boss member **110** is substantially cylindrical, and has the first boss hole (hereinafter simply referred to as the "boss hole") **111**. The center axis of the boss hole **111** essentially coincides with the center axis of the crankshaft **22**. An inner peripheral surface **110is** of the boss member **110** has a spline region **SP** in which spline structures (specifically, spline grooves **sg**) are formed. The boss member **110** is made of an iron alloy, for example.

The sheave member **120** has a substantially disk shape with a throughhole in its center, and includes a sheave surface **121** and a rear surface **122**. The sheave surface **121** is a face that is opposite the first fixed sheave **58** and receives the belt **43**. The rear surface **122** is a face that is located on an opposite side to the sheave surface **121**. The rear surface **122** includes a plurality of fins **123**. Each of the plurality of fins **123** extends in a radial direction. The sheave member **120** is made of an aluminum alloy, for example.

Via plastic flow coupling, the sheave member **120** is mounted to an attachment region **AR** being a part of an outer peripheral surface **110os** of the boss member **110**. The attachment region **AR** is located at one end of the boss member **110** (i.e., an end of the continuously variable transmission **15** that is closer to the first fixed sheave **58**).

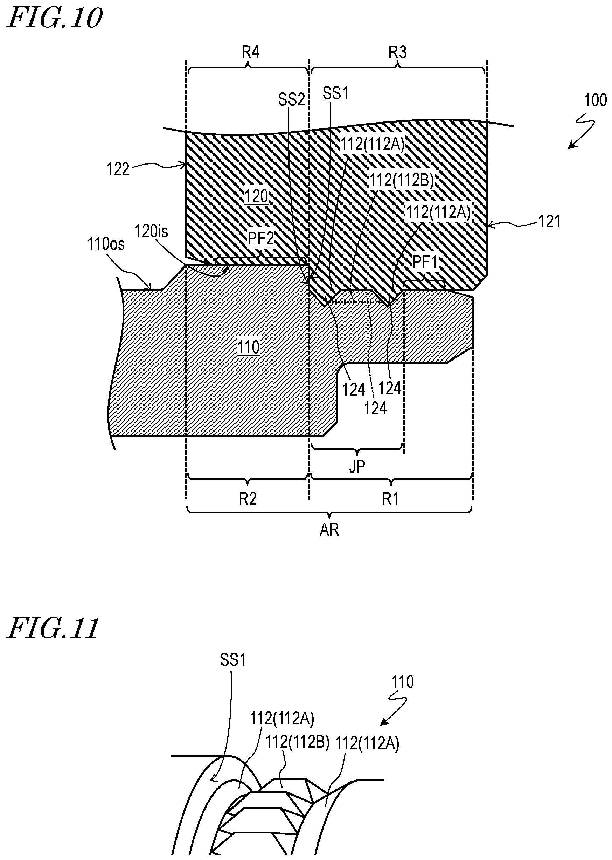

Now, with reference also to FIG. **10**, the structure of the attachment region **AR** and its neighborhood will be described. FIG. **10** is a cross-sectional view showing enlarged the attachment region **AR** and its neighborhood.

The attachment region **AR** includes a first region **R1** and a second region **R2,** which have respective different diameters. The first region **R1** has a smaller diameter than does the second region **R2**. In other words, the second region **R2** has a larger diameter than does the first region **R1**. At the boundary between the first region **R1** and the second region **R2**, a step surface **SS1** extending in a radial direction exists. Thus, the attachment region **AR** has a stepped shape that includes the first region **R1** having a relatively small diameter, the second region **R2** having a relatively large diameter, and the step surface **SS1** located at the boundary between the first region **R1** and the second region **R2**.

The first region **R1**, the step surface **SS1,** and the second region **R2** are disposed in this order from the sheave surface **121** side toward the rear surface **122** side. Moreover, the sheave member **121** abuts with the step surface **SS1**.

An inner peripheral surface **120is** of the sheave member **120** includes a third region **R3** and a fourth region **R4** having respective different diameters. The third region **R3** has a smaller diameter than does the fourth region **R4**. In other words, the fourth region **R4** has a larger diameter than does the third region **R3**. At the boundary between the third region **R3** and the fourth region **R4**, a step surface **SS2** extending in a radial direction exists. Thus, the inner peripheral surface **120is** of the sheave member **120** includes the third region **R3** having a relatively small diameter and the fourth region **R4** having a relatively large diameter and the step surface **SS2** located at the boundary between the third region **R3** and the fourth region **R4**, the step surface **SS2** abutting with the step surface **SS1** of the boss member **110**. Hereinafter, the step surface **SS1** of the boss member **110** may be referred to as the "first step surface", and the step surface **SS2** of the sheave member **120** referred to the "second step surface".

Herein, the first region **R1** of the attachment region **AR** of the boss member **110** has a plurality of grooves **112**, and the third region **R3** of the sheave member **120** has a plurality of projecting ribs (linear protrusions) **124** that fit in these grooves **112**, whereby mechanical joining is achieved. As will be described later, the projecting ribs **124** of the sheave member **120** are formed, when the sheave member **120** is mounted to the boss member **110**, as the sheave member **120** abuts with the step surface **SS1** of the boss member **110** to undergo plastic deformation (or more specifically, as the metal material of the sheave member **120** undergoes plastic flow and flows into the grooves **112** of the boss member **110**). A region **JP** of the attachment region **AR** in which the plurality of grooves **112** are formed will be referred to as the "joining portion" in the following description.

In the illustrated example, the first region **R1** of the attachment region **AR** includes a first press-fit portion **PF1** in which the sheave member **120** is press-fitted, whereas the second region **R2** of the attachment region **AR** includes a second press-fit portion **PF2** in which the sheave member **120** is press-fitted.

FIG. **11** is a perspective view showing the plurality of grooves **112** of the boss member **110** and their neighborhood. As shown in FIG. **11**, the plurality of grooves **112** include two first grooves **112A** and a plurality of second grooves **112B**.

Each of the two first grooves **112A** extends along the circumferential direction of the boss member **110**. Each first grooves **112A** has a substantially triangular cross-sectional shape. In other words, the first grooves **112A** are so-called V grooves.

Each of the plurality of second grooves **112B** is located between the two first grooves **112A**, and extends along the axial direction of the boss member **110**. Each second groove **112B** is continuous with the two first grooves **112A**. Each second groove **112B** has a substantially triangular cross-sectional shape. In other words, the second grooves **112B** are also so-called V grooves.

The sheave **100** having the above-described construction can be produced by a method described below.

First, a boss member **110** made of a first metal material is provided (first preparation step). Separately from the first preparation step, a sheave member **120** that is made of a second metal material which is a different kind from the first metal material is provided (second preparation step). As has already been described, the second metal material is a material that is more liable to plastic deformation than the first metal material.

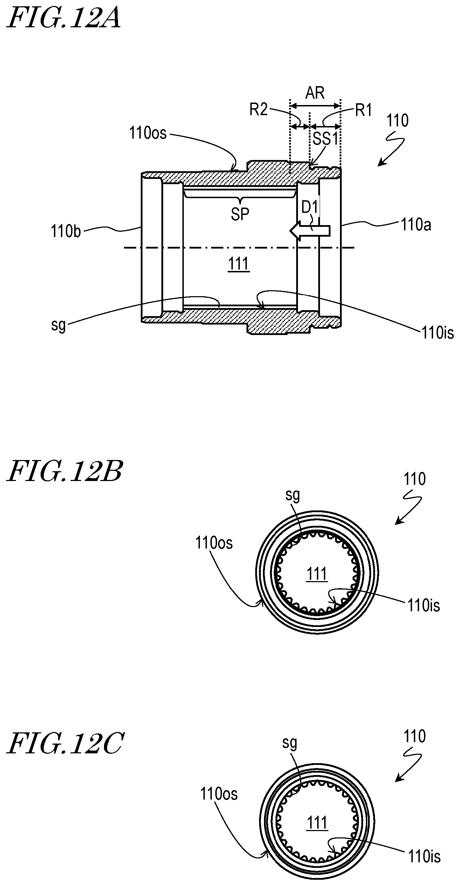

FIG. **12A**, FIG. **12B,** and FIG. **12C** are diagrams showing the boss member **110** that is provided in the first preparation step. FIG. **12A** is a cross-sectional view of the boss member **110**, whereas FIG. **12B** and FIG. **12C** are side views of the boss member **110**.

The boss member **110** to be provided in the first preparation step has essentially the same shape as the boss member **110** in the completed sheave **100**. Now, given a "first direction" defined as a direction **D1** (see FIG. **12A**) from one end (i.e., an end of the continuously variable transmission **15** at the outer side of the axial direction) **110a** to another end (i.e., an end of the continuously variable transmission **15** at the inner side of the axial direction) **110b** of the boss member **110**, the direction **D1** being parallel to the axial direction of the boss member **110**, the first region **R1** of the attachment region **AR** of the boss member **110**, the first step surface **SS1,** and the second region **R2** are disposed in this order along the first direction **D1**.

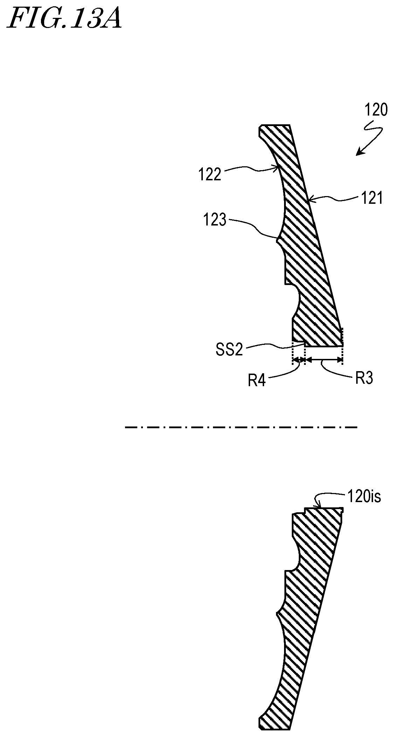

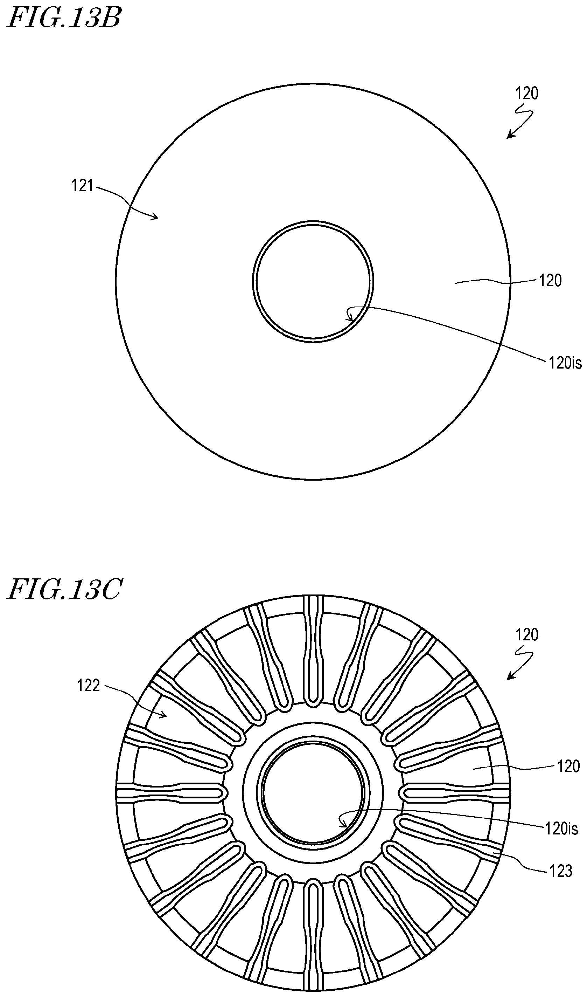

FIG. **13A**, FIG. **13B,** and FIG. **13C** are diagrams showing the sheave member **120** to be provided in the second preparation step. FIG. **13A** is a cross-sectional view of the sheave member **120**, whereas FIG. **13B** and FIG. **13C** are side views of the sheave member **120**.

The sheave member **120** to be provided in the second preparation step has a slightly different shape from the sheave member **120** in the completed sheave **100**. The inner peripheral surface **120is** of the sheave member **120** to be provided includes a third region **R3** having a relatively small diameter, a fourth region **R4** having a relatively large diameter, and a second step surface **SS2** located at the boundary between the third region **R3** and the fourth region **R4**. However, the inner peripheral surface **120is** of the sheave member **120** to be provided does not have projecting ribs **124**. Moreover, the position of the second step surface **SS2** in the sheave member **120** to be provided is different from the position of the second step surface **SS2** in the completed sheave **100**. In the sheave member **120** to be provided, a length along the axial direction of the third region **R3** is larger than a length along the axial direction of the third region **R3** in the completed sheave **100**. In other words, in the sheave member **120** to be provided, a length along the axial direction of the fourth region **R4** is smaller than a length along the axial direction of the fourth region **R3** in the completed sheave **100**. Therefore, it can be said that the position of the second step surface **SS2** in the sheave member **120** to be provided is shifted toward the rear surface **122** relative to the position of the second step surface **SS2** in the completed sheave **100**.

After the first preparation step and the second preparation step, the sheave member **120** is mounted to the attachment region **AR** being a part of the outer peripheral surface **110os** of the boss member **110** via plastic flow coupling (mounting step). This mounting step is carried out by pressurizing the sheave member **120** and/or the boss member **110** to cause a relative movement of the sheave member **120** with respect to the boss member **110** in the first direction **D1**.

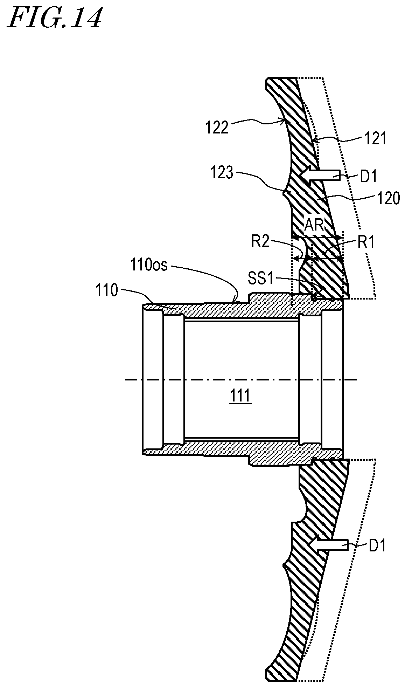

An example implementation of the mounting step is shown in FIG. **14**. In the example shown in FIG. **14**, the mounting step is carried out by pressurizing the sheave member **120** to move it in the first direction **D1**. In the mounting step, a part of the sheave member **120** abuts with the step surface **SS1** of the attachment region **AR** of the boss member **120** to undergo plastic deformation, thereby effecting the plastic flow coupling.

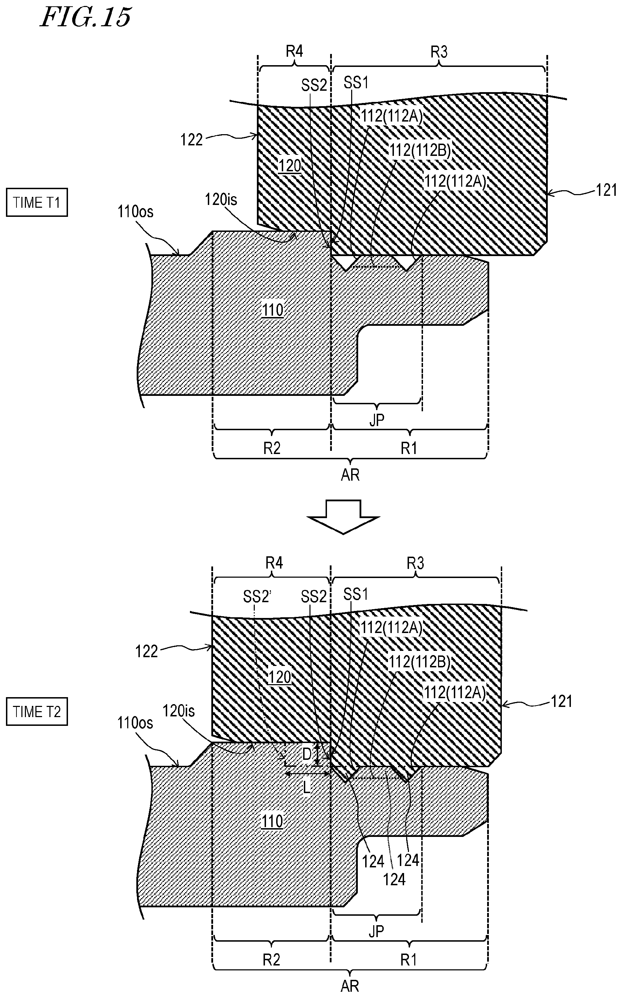

In an upper portion of FIG. **15** is shown a relative positioning between the sheave member **120** and the boss member **110** at a time T1 when the second step surface **SS2** of the sheave member **120** (i.e., a part of the sheave member **120**) makes initial contact with the first step surface **SS1** of the boss member **110**; in a lower portion is shown a relative positioning between the sheave member **120** and the boss member **110** at a time T2 when the relative movement of the sheave member **120** with respect to the boss member **110** is completed.

As can be seen from a comparison between the upper portion and the lower portion of FIG. **15**, through plastic deformation of the sheave member **120**, projecting ribs **124** that fit the grooves **112** of the boss member **110** are formed, whereby mechanical joining is achieved. Moreover, from a comparison between the upper portion and the lower portion of FIG. **15**, it can be seen that plastic deformation of the sheave member **120** has caused the position of the second step surface **SS2** to be shifted toward the sheave surface **121**.

In the lower portion of FIG. **15**, the original (i.e., without undergoing plastic deformation) shape of the sheave member **120** is shown by an imaginary line (double-dot dashed line). The distance **L** from the original position **SS2'** of the second step surface **SS2** to the position of the second step surface **SS2** after plastic deformation is the amount of relative movement of the sheave member **120** from time T1 to time T2 as aforementioned, which will hereinafter be referred to as the "intrusion length". Moreover, radial length (which is also the radial length of the second step surface **SS2**) **D** of the first step surface **SS1** will hereinafter be referred to as the "step height".

Although FIG. **14** illustrates an implementation where the sheave member **120** is pressurized to move in the first direction **D1**, this is not the only possible implementation of the mounting step. The boss member **110** may be pressurized to move in the opposite direction (second direction) of the first direction **D1**. Alternatively, the sheave member **120** may be pressurized to move in the first direction **D1** while the boss member **110** is pressurized to move in the second direction.

In this manner, the sheave **100** is obtained. After the mounting step, as necessary, the boss member **110** and/or the sheave member **120** may be subjected to machining or the like.

As described above, in the sheave **100** according to the embodiment of the present invention, the boss member **110** and the sheave member **120** are made of different kinds of metal materials from each other, so that appropriate materials as desired can be provided respectively at different sites (specifically, the site that has the boss hole **111** and the site that has the sheave surface **121** to receive the belt **43**) of the sheave **100**. Because the sheave member **120** is mounted to the attachment region **AR** being a part of the outer peripheral surface **110os** of the boss member **110** via plastic flow coupling, even though the sheave member **120** and the boss member **110** are made of different kinds of metal materials from each other, joining can be achieved relatively simply, with a high positional accuracy, and compactly (i.e., without causing a layout enlargement). On the other hand, if the boss member and the sheave member are joined by using other joining methods (e.g., riveting or cast joining), manufacturing can become complicated, positional accuracy during joining may be low, or the layout may become enlarged.

Moreover, in the sheave **100** according to the embodiment of the present invention, the attachment region **AR** being a part of the outer peripheral surface **110os** of the boss member **110** has a stepped shape that includes the first region **R1** having a relatively small diameter, the second region **R2** having a relatively large diameter, and the step surface **SS1** located at the boundary between the first region **R1** and the second region **R2**. The first region **R1**, the step surface **SS1,** and the second region **R2** are disposed in this order from the sheave surface **121** side toward the rear surface **122** side, such that the sheave member **120** abuts with the step surface **SS1**. Therefore, disengagement of the sheave member **120** that may be caused by a force applied by the belt **43** during the operation of the continuously variable transmission **15** (i.e., a force acting in the first direction **D1**) is prevented. In other words, the step surface **SS1** serves as a disengagement prevention for the sheave member **120**.

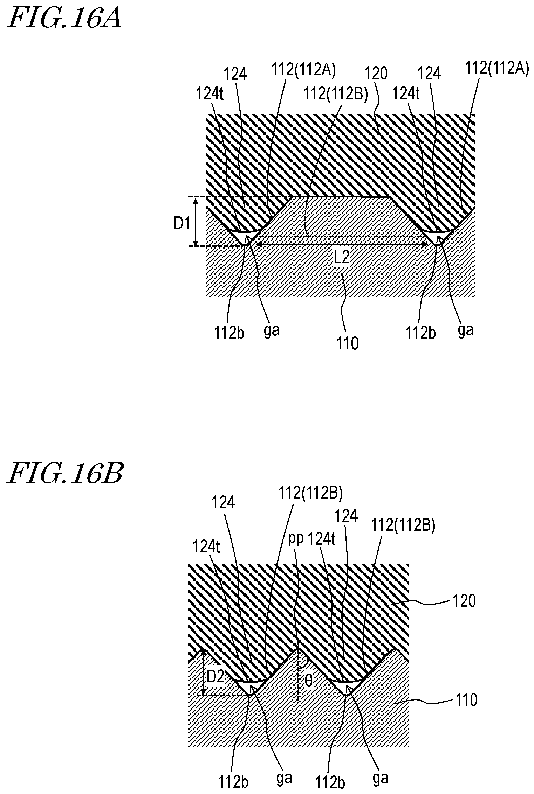

Although FIG. **10** and the like illustrate an example where no gap exists between the grooves **112** of the boss member **110** and the projecting ribs **124** of the sheave member **120**, as shown in FIG. **16A** and FIG. **16B**, a gap **ga** may be provided between a bottom **112b** of each groove **112** and a top **124t** of a projecting rib **124** fitting in that groove **112**. FIG. **16A** shows a cross section orthogonal to the direction in which the first grooves **112A** extend, and FIG. **16B** shows a cross section orthogonal to the direction in which the second grooves **112B** extend. In the construction shown in FIG. **16A**, gaps **ga** are provided between the bottoms **112b** of the first grooves **112A** and the tops **124t** of the projecting ribs **124** fitting in the first grooves **112A**. In the construction shown in FIG. **16B**, gaps **ga** are provided between the bottoms **112b** of the second grooves **112B** and the tops **124t** of the projecting ribs **124** fitting in the second grooves **112B**.

From the standpoint of preventing cracking of the sheave member **120** during plastic flow coupling, as shown in FIG. **16A** and FIG. **16B**, it is preferable that a gap **ga** is provided between the bottom **112b** of each groove **112** and the top **124t** of a projecting rib **124** fitting in that groove **112**. If plastic flow coupling is effected in such a manner that no gaps **ga** exist between the bottoms **112b** of the grooves **112** and the tops **124t** of the projecting ribs **124**, the amount of plastic deformation of the metal material of the sheave member **120** needs to be sufficiently large, in which case cracking of the sheave member **120** may occur. By effecting plastic flow coupling so that gaps **ga** are provided between the bottoms **112b** of the grooves **112** and the tops **124t** of the projecting ribs **124**, cracking of the sheave member **120** can be restrained.

As has been illustrated, it is preferable that the plurality of grooves **112** of the boss member **120** include two first grooves **112A** extending along the circumferential direction and a plurality of second grooves **112B** being located between the two first grooves **112A** and extending along the axial direction of the boss member **110**. Because the projecting ribs **124** of the sheave member **120** fit in the first grooves **112A** extending along the circumferential direction, disengagement of the sheave member **120** is restrained. Moreover, because the projecting ribs **124** of the sheave member **120** fit in the second grooves **112B** extending along the axial direction of the boss member **110**, rotation (twisting) of the sheave member **120** with respect to the boss member **110** is restrained.

Within the attachment region **AR** of the boss member **110**, the joining portion **JP,** in which the plurality of grooves **112** are formed (see FIG. **10**), actually contributes to joining. As the length **L2** (see FIG. **16A**) of the second grooves **112B** increases, the length of the joining portion **JP** along the axial direction of the boss hole **111** (which may be called the "fitting length") also increases to provide an improved joint strength, whereby tilting of the sheave member **120** caused by a force applied by the belt **43** can be restrained. Moreover, as the length **L2** of the second grooves **112B** increases, the meshing area between the boss member **110** and the sheave member **120** becomes larger, thus achieving an enhanced effect of restraining the rotation of the sheave member **120** with respect to the boss member **110** and an improved heat-releasing ability of the sheave member **120**. Specifically, it is preferable that the length **L2** of the second grooves **112B** is 3 mm or greater.

If the depth **D2** of the second grooves **112B** (see FIG. **16B**) is too large, the amount of plastic deformation of the metal material of the sheave member **120** needs to be large, in which case cracking of the sheave member **120** may be of concern. From the standpoint of restraining cracking of the sheave member **120**, it is preferable that the depth **D2** of the second grooves **112B** is 2 mm or smaller.

From the standpoint of increasing the length of the joining portion **JP** and the standpoint of increasing the meshing area between the boss member **110** and the sheave member **120**, it is preferable that a ratio L2/D2 of the length **L2** to the depth **D2** of the second grooves **112B** is 5 or greater.

As is illustrated in FIG. **16B**, when the plurality of second grooves **112B** are disposed so that essentially no interspace exists between two adjacent second grooves **112B**, it is preferable that a peak portion **pp** that is defined between the two adjacent second grooves **112B** has a radius of curvature of 0.5 mm or smaller. As a result, the geometric area of the joining interface can be increased to provide an improved strength of joining.

It is preferable that a tilting angle **θ** of the side surfaces of the second grooves **112B** with respect to the depth direction is not less than 30° and not more than 60°. This can further facilitate plastic flow the metal material of the sheave member **120**, and restrain cracking of the sheave member **120**.

It is preferable that the bottoms **112b** of the second grooves **112B** have a radius of curvature of 0.5 mm or smaller. As a result, the geometric area of the joining interface can be increased to provide an improved strength of joining.

From the standpoint of preventing disengagement of the sheave member **120**, it is preferable that the depth **D1** (see FIG. **16A**) of the first grooves **112A** is 0.5 mm or greater. From the standpoint of restraining cracking of the sheave member **120**, it is preferable that the depth **D1** of the first grooves **112A** is 2 mm or smaller.

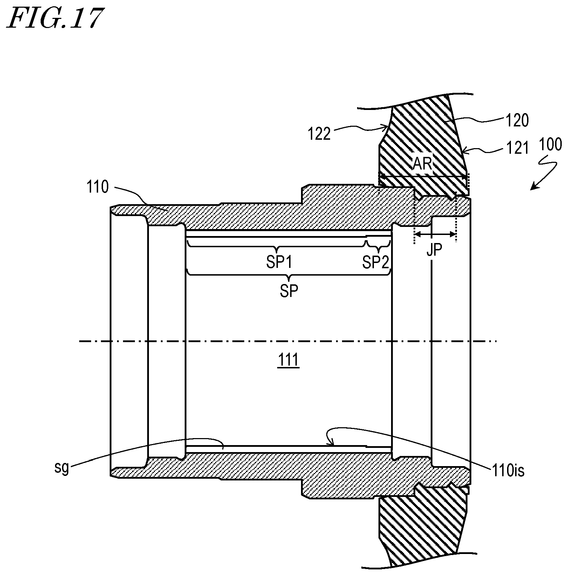

As has already been described, the inner peripheral surface **110is** of the boss member **110** includes the spline region **SP** in which spline structures for spline coupling with a shaft member that is allowed to extend through the boss hole **111** are formed. As shown in FIG. **17**, it is preferable that a clearance regarding the axial direction of the boss member **110** is provided between the joining portion **JP** of the attachment region **AR** (i.e., a region where the plurality of grooves **112** are formed) and the spline region **SP**. When the sheave member **120** becomes mounted to the boss member **110** via plastic flow coupling, a force to constrict inwardly along radial directions may act on the joining portion **JP** of the boss member **110**. Axial clearance being provided between the joining portion **JP** and the spline region **SP** makes it easy to ensure slidability of the boss member **110** with respect to the shaft member.

In the construction illustrated in FIG. **17**, the spline region **SP** includes the first spline portion **SP1** having a first spline minor diameter and the second spline portion **SP2** having a second spline minor diameter which is greater than the first spline minor diameter, the second spline portion **SP2** being disposed closer to the joining portion **JP** than is the first spline portion **SP1**. By adopting such a construction, it becomes even easier to ensure slidability of the boss member **110** with respect to the shaft member.

From the standpoint of restraining the tilt of the sheave member **120** that may be caused by a force applied by the belt **43**, it is preferable that the length of the second press-fit portion **PF2** included in the second region **R2** of the attachment region **AR** is larger than the length of the first press-fit portion **PF1** included in the first region **R1** of the attachment region **AR**.

In the construction illustrated in FIG. **9** and the like, the rear surface **122** of the sheave member **120** includes a plurality of fins **123**. When the rear surface **122** of the sheave member **120** includes the plurality of fins **123**, a further improvement in heat-releasing ability can be obtained. Note that the number, shape, size, etc. of the fins **123** are not limited to what is illustrated in FIG. **9**.

There is no particular limitation as to the first metal material composing the boss member **110** and the second metal material composing the sheave member **120**. By using an iron alloy as the first metal material and an aluminum alloy as the second metal material, an improved heat-releasing ability and light weight of the sheave member **120** can be achieved while providing sufficient strength and rigidity for the boss member **110**. As an iron alloy, a carbon steel for mechanical structures can be suitably used, for example; as an aluminum alloy, an Al-Si-based alloy can be suitably used, for example.

As a combination of the first metal material and the second metal material, a combination of an iron alloy and a magnesium alloy, a combination of a titanium alloy and an aluminum alloy, a combination of an iron alloy and a copper alloy, or the like may also be used, besides the aforementioned combination of an iron alloy and an aluminum alloy.

As has already been described, as the length (i.e., length along the axial direction of the boss hole **111**) of the portion of the attachment region **AR** of the boss member **110** that actually contributes to joining (i.e., joining portion **JP**) increases, the joint strength becomes more improved. From the standpoint of suitably causing a plastic flow of the metal material of the sheave member **120** throughout an entire joining portion **JP** having a large length along the axial direction, it is preferable that a ratio L/D of the intrusion length **L** to the step height **D** is greater than a certain degree, and specifically, 1.9 or greater.

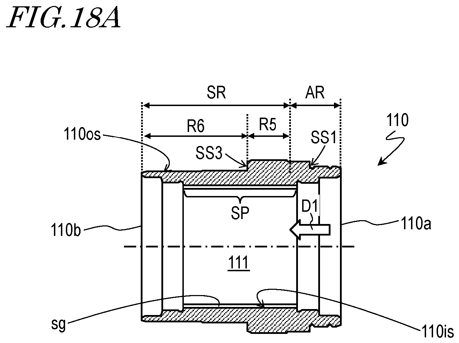

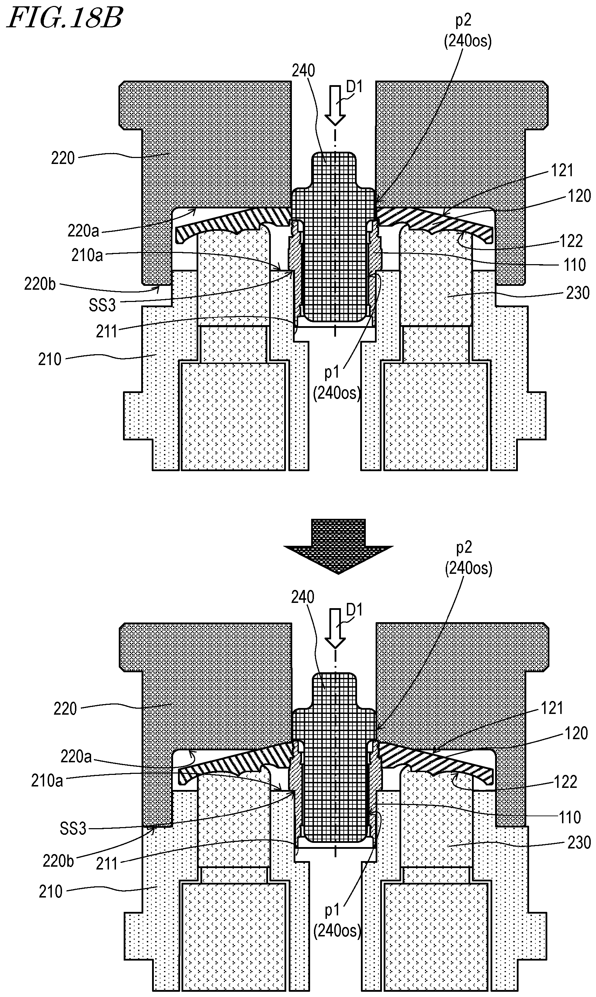

Now, with reference to FIG. **18A** and FIG. **18B**, a more specific example of a production method for the sheave **100** will be described.

Although not mentioned in the above description, any region of the outer peripheral surface **110os** of the boss member **110** other than the attachment region **AR** may serve as a supporting region **SR** (see FIG. **18A**) for supporting the boss member **110** during the mounting step. The supporting region **SR** includes a fifth region **R5** having a relatively large diameter, a sixth region **R6** having a relatively small diameter, and a step surface (third step surface) **SS3** being located between the fifth region **R5** and the sixth region **R6** and extending in a radial direction. The fifth region **R5**, the third step surface **SS3**, and the sixth region **R6** are disposed in this order along the first direction **D1**.

The mounting step may be carried out, as shown in FIG. **18B**, for example, while the boss member **110** is supported by the first supporting fixture **210**, by pressurizing the sheave member **120** in the first direction **D1** with the pressurizing fixture **220**.

The first supporting fixture **210** includes a supporting hole **211** having approximately the same diameter as the sixth region **R6** of the supporting region **SR** of the boss member **110**. As the third step surface **SS3** of the boss member **110** abuts with the upper end surface **210a** of the first supporting fixture **210** while the boss member **110** remains fitted in the supporting hole **211**, the boss member **110** becomes supported by the first supporting fixture **210**.

The pressurizing fixture **220** includes a pressurizing surface **220a** that abuts with the sheave surface **121** of the sheave member **120** to pressurize the sheave member **120** and an abutting surface **220b** that protrudes more toward the first supporting fixture **210** relative to the pressurizing surface **220a**. During the mounting step, as the the abutting surface **220b** of the pressurizing fixture **220** abuts with the first supporting fixture **210**, movement of the sheave member **120** is completed.

Thus, it is preferable that, during the mounting step, movement of the sheave member **120** is completed as the pressurizing fixture **220** abuts with the first supporting fixture **210**. This makes it easy to maintain a constant amount of movement (intrusion length **L**) of the sheave member **120**.

In the example shown in FIG. **18B**, during the mounting step, a second supporting fixture **230** that can elastically support a member to be supported may also be used. There is no particular limitation as to the specific construction of the second supporting fixture **230**. The second supporting fixture **230** includes a gas spring, for example.

As the mounting step is carried out while the rear surface **122** of the sheave member **120** is elastically supported by the second supporting fixture **230**, unintended deformation of the sheave member **120** can be restrained.

Furthermore, in the example shown in FIG. **18B**, during the mounting step, a center alignment fixture **240** is also used. The center alignment fixture **240** is substantially cylindrical, such that an outer peripheral surface **240os** of the center alignment fixture **240** includes a first portion **p1** that abuts with the inner peripheral surface **110is** of the boss member **110** and a second portion **p2** that abuts with the inner peripheral surface **120is** of the sheave member **120**.

As the mounting step is carried out while the center alignment fixture **240** is placed so as to abut with both of the inner peripheral surface **110is** of the boss member **110** and the inner peripheral surface **120is** of the sheave member **120**, it is easily ensured that the axis center of the boss member **110** coincides with the axis center of the sheave member **120**.

As described above, the sheave **100** for a continuously variable transmission according to an embodiment of the present invention is a sheave **100** for a continuously variable transmission including: a boss member **110** being made of a first metal material and having a boss hole **111**; and a sheave member **120** that is made of a second metal material which is a different kind from the first metal material, the sheave member **120** including a sheave surface **121** to receive a belt **43** and a rear surface **122** that is located on an opposite side to the sheave surface **121**, wherein the sheave member **120** is mounted on an attachment region **AR** being a part of the outer peripheral surface **110os** of the boss member **110** via plastic flow coupling. The attachment region **AR** has a stepped shape that includes a first region **R1** having a relatively small diameter, a second region **R2** having a relatively large diameter, and a step surface **SS1** located at a boundary between the first region **R1** and the second region **R2**, such that the first region **R1**, the step surface **SS1,** and the second region **R2** are disposed in this order from the sheave surface **121** side toward the rear surface **122** side, and the sheave member **120** abuts with the step surface **SS1**.

In the sheave **100** for a continuously variable transmission according to an embodiment of the present invention, the boss member **110** and the sheave member **120** are made of different kinds of metal materials from each other, so that appropriate materials as desired can be provided respectively at different sites (specifically, the site that has the boss hole **111** and the site that has the sheave surface **121** to receive the belt **43**) of the sheave **100**. Because the sheave member **120** is mounted to the attachment region **AR** being a part of the outer peripheral surface **110os** of the boss member **110** via plastic flow coupling, even though the sheave member **120** and the boss member **110** are made of different kinds of metal materials from each other, joining can be achieved relatively simply, with a high positional accuracy, and compactly (i.e., without causing a layout enlargement).

Moreover, in the sheave **100** for a continuously variable transmission according to an embodiment of the present invention, the attachment region **AR** being a part of the outer peripheral surface **110os** of the boss member **110** has a stepped shape that includes the first region **R1** having a relatively small diameter, the second region **R2** having a relatively large diameter, and the step surface **SS1** located at the boundary between the first region **R1** and the second region **R2**. The first region **R1**, the step surface **SS1,** and the second region **R2** are disposed in this order from the sheave surface **121** side toward the rear surface **122**, such that the sheave member **120** abuts with the step surface **SS1**. Therefore, disengagement of the sheave member **120** that may be caused by a force applied by the belt **43** during the operation of the continuously variable transmission **15** is prevented. In other words, the step surface **SS1** serves as a disengagement prevention for the sheave member **120.**

In one embodiment, the first region **R1** of the attachment region **AR** of the boss member **110** has a plurality of grooves **112**, and the sheave member **120** has a plurality of projecting ribs **124** fitting in the plurality of grooves **112**.

In the sheave **100** for a continuously variable transmission according to an embodiment of the present invention, For example, the first region **R1** of the attachment region **AR** of the boss member **110** has the plurality of grooves **112**, and the sheave member **120** has a plurality of projecting ribs **124** fitting in these grooves **112**, whereby mechanical joining is achieved. The projecting ribs of the sheave member **120** may be formed, when the sheave member **120** is mounted to the boss member **110**, as the sheave member **120** abuts with the step surface **SS1** of the boss member **110** to undergo plastic deformation (or more specifically, as the metal material of the sheave member **120** undergoes plastic flow and flows into the grooves **112** of the boss member **110**).

In one embodiment, a gap **ga** is provided between a bottom **112b** of each of the plurality of grooves **112** and a top **124t** of a projecting rib **124** fitting in the groove **112**.

From the standpoint of preventing cracking of the sheave member **120** during plastic flow coupling, it is preferable that a gap **ga** is provided between the bottom **112b** of each groove **112** and the top **124t** of a projecting rib **124** fitting in that groove **112**. If plastic flow coupling is effected in such a manner that no gaps **ga** exist between the bottoms **112b** of the grooves **112** and the tops **124t** of the projecting ribs **124**, the amount of plastic deformation of the metal material of the sheave member **120** needs to be sufficiently large, in which case cracking of the sheave member **120** may occur. By effecting plastic flow coupling so that gaps **ga** are provided between the bottoms **112b** of the grooves **112** and the tops **124t** of the projecting ribs **124**, cracking of the sheave member **120** can be restrained.

In one embodiment, the plurality of grooves **112** include two first grooves **112A** extending along the circumferential direction of the boss member **110** and a plurality of second grooves **112B** being located between the two first grooves **112A** and extending along the axial direction of the boss member **110**.

It is preferable that the plurality of grooves **112** of the boss member **120** include two first grooves **112A** extending along the circumferential direction and a plurality of second grooves **112B** being located between the two first grooves **112A** and extending along the axial direction of the boss member **110**. Because the projecting ribs **124** of the sheave member **120** fit in the first grooves **112A** extending along the circumferential direction, disengagement of the sheave member **120** is restrained. Moreover, because the projecting ribs **124** of the sheave member **120** fit in the second grooves **112B** extending along the axial direction of the boss member **110**, rotation (twisting) of the sheave member **120** with respect to the boss member **110** is restrained.

In one embodiment, a length **L2** of each of the plurality of second grooves **112B** is 3 mm or greater.

Within the attachment region **AR** of the boss member **110**, the portion **JP,** in which the plurality of grooves **112** are formed, is the "joining portion" that actually contributes to joining. As the length **L2** of the second grooves **112B** increases, the length of the joining portion **JP** along the axial direction of the boss hole **111** (which may be called the "fitting length") also increases to provide an improved joint strength, whereby tilting of the sheave member **120** caused by a force applied by the belt **43** can be restrained. Moreover, as the length **L2** of the second grooves **112B** increases, the meshing area between the boss member **110** and the sheave member **120** becomes larger, thus achieving an enhanced effect of restraining the rotation of the sheave member **120** with respect to the boss member **110** and an improved heat-releasing ability of the sheave member **120**. Specifically, it is preferable that the length **L2** of the second grooves **112B** is 3 mm or greater.

In one embodiment, the depth **D2** of each of the plurality of second grooves **112B** is 2 mm or smaller.

If the depth **D2** of the second grooves **112B** is too large, the amount of plastic deformation of the metal material of the sheave member **120** needs to be large, in which case cracking of the sheave member **120** may be of concern. From the standpoint of restraining cracking of the sheave member **120**, it is preferable that the depth **D2** of the second grooves **112B** is 2 mm or smaller.

In one embodiment, a ratio L2/D2 of the length **L2** to the depth **D2** of each of the plurality of second grooves **112B** is 5 or greater.

From the standpoint of increasing the length of the joining portion **JP** and the standpoint of increasing the meshing area between the boss member **110** and the sheave member **120**, it is preferable that a ratio L2/D2 of the length **L2** to the depth **D2** of the second grooves **112B** is 5 or greater.

In one embodiment, the plurality of second grooves **112B** are disposed so that essentially no interspace exists between two adjacent second grooves **112B**, and a peak portion **pp** that is defined between the two adjacent second grooves **112B** has a radius of curvature of 0.5 mm or smaller.

When the plurality of second grooves **112B** are disposed so that essentially no interspace exists between two adjacent second grooves **112B**, it is preferable that a peak portion **pp** that is defined between the two adjacent second grooves **112B** has a radius of curvature of 0.5 mm or smaller. As a result, the geometric area of the joining interface can be increased to provide an improved strength of joining.

In one embodiment, a tilting angle **θ** of a side surface of each of the plurality of second grooves **112B** with respect to the depth direction is not less than 30° and not more than 60°.

It is preferable that a tilting angle **θ** of the side surface of the second grooves **112B** with respect to the depth direction is not less than 30° and not more than 60°. This can further facilitate plastic flow the metal material of the sheave member **120**, and restrain cracking of the sheave member **120**.

In one embodiment, a bottom **112b** of each of the plurality of second grooves **112B** has a radius of curvature of 0.5 mm or smaller.

It is preferable that the bottoms **112b** of the second grooves **112B** have a radius of curvature of 0.5 mm or smaller. As a result, the geometric area of the joining interface can be increased to provide an improved strength of joining.

In one embodiment, a depth **D1** of each of the plurality of first grooves **112A** is 2 mm or smaller.

From the standpoint of restraining cracking of the sheave member **120**, it is preferable that the depth **D1** of the first grooves **112A** is 2 mm or smaller. Note that, from the standpoint of preventing disengagement of the sheave member **120**, it is preferable that the depth **D1** of the first grooves **112A** is 0.5 mm or greater.

In one embodiment, the inner peripheral surface **110is** of the boss member **110** includes a spline region **SP** in which spline structures are formed, and clearance regarding the axial direction of the boss member **110** is provided between a joining portion **JP** and the spline region **SP**, the joining portion **JP** being defined as a region of the attachment region **AR** where the plurality of grooves **112** are formed.

The inner peripheral surface **110is** of the boss member **110** may include the spline region **SP** in which spline structures for spline coupling with a shaft member that is allowed to extend through the boss hole **111** are formed. It is preferable that a clearance regarding the axial direction of the boss member **110** is provided between the joining portion **JP,** which is a region of the attachment region **AR** where the plurality of grooves **112** are formed, and the spline region **SP**. When the sheave member **120** becomes mounted to the boss member **110** via plastic flow coupling, a force to constrict inwardly along radial directions may act on the joining portion **JP** of the boss member **110**. Axial clearance being provided between the joining portion **JP** and the spline region **SP** makes it easy to ensure slidability of the boss member **110** with respect to the shaft member.

In one embodiment, the spline region **SP** includes a first spline portion **SP1** having a first spline minor diameter and a second spline portion **SP2** having a second spline minor diameter which is greater than the first spline minor diameter, the second spline portion **SP2** being disposed closer to the joining portion **JP** than is the first spline portion **SP1**.

By adopting a construction where the spline region **SP** includes the first spline portion **SP1** having a first spline minor diameter and the second spline portion **SP2** having a second spline minor diameter which is greater than the first spline minor diameter, the second spline portion **SP2** being disposed closer to the joining portion **JP** than is the first spline portion **SP1,** it becomes even easier to ensure slidability of the boss member **110** with respect to the shaft member.

In one embodiment, the first region **R1** of the attachment region **AR** includes a first press-fit portion **PF1** in which the sheave member **120** is press-fitted; the second region **R2** of the attachment region **AR** includes a second press-fit portion **PF2** in which the sheave member **120** is press-fitted; and a length of the second press-fit portion **PF2** along the axial direction of the boss member **110** is greater than a length of the first press-fit portion **PF1** along the axial direction of the boss member **110**.

From the standpoint of restraining the tilt of the sheave member **120** that may be caused by a force applied by the belt **43**, it is preferable that the length of the second press-fit portion **PF2** included in the second region **R2** of the attachment region **AR** is larger than the length of the first press-fit portion **PF1** included in the first region **R1** of the attachment region **AR**.

In one embodiment, the rear surface **122** of the sheave member **120** includes a plurality of fins **123**.

When the rear surface **122** of the sheave member **120** includes the plurality of fins **123**, a further improvement in heat-releasing ability can be obtained.

In one embodiment, the first metal material is an iron alloy, and the second metal material is an aluminum alloy.

By using an iron alloy as the first metal material and an aluminum alloy as the second metal material, an improved heat-releasing ability and light weight of the sheave member **120** can be achieved while providing sufficient strength and rigidity for the boss member **110**.

A continuously variable transmission **15** according to an embodiment of the present invention includes a rotation shaft (crankshaft **22**) and a movable sheave **100** supported by the rotation shaft so as to be capable of sliding along the axial direction of the rotation shaft, and the movable sheave **100** is a sheave **100** for a continuously variable transmission having any of the aforementioned constructions.

A straddled vehicle according to an embodiment of the present invention includes the continuously variable transmission **15** having the above-described construction.

A production method of a sheave **100** for a continuously variable transmission according to an embodiment of the present invention includes: step (A) of providing a boss member **110** being made of a first metal material and having a boss hole **111**; step (B) of providing a sheave member **120** that is made of a second metal material which is a different kind from the first metal material, the sheave member **120** including a sheave surface **121** to receive a belt **43** and a rear surface **122** that is located on an opposite side to the sheave surface **121**; and step (C) of mounting the sheave member **120** to an attachment region **AR** being a part of an outer peripheral surface **110os** of the boss member **110** via plastic flow coupling. Step (C) is carried out by, when a direction **D1** being parallel to the axial direction of the boss member **110** and going from one end **110a** to another end **110b** of the boss member **110** is defined as a first direction, pressurizing the sheave member **120** and/or the boss member **110** to cause a relative movement of the sheave member **120** with respect to the boss member **110** in the first direction **D1**. The attachment region **AR** of the boss member **110** has a stepped shape that includes a first region **R1** having a relatively small diameter, a second region **R2** having a relatively large diameter, and a step surface **SS1** located at a boundary between the first region **R1** and the second region **R2**, such that the first region **R1**, the step surface **SS1,** and the second region **R2** are disposed in this order along the first direction **D1**, and, in step (C), a part of the sheave member **120** abuts with the step surface **SS1** of the boss member **110** to undergo plastic deformation, whereby the plastic flow coupling is effected.

In the production method of the sheave **100** for a continuously variable transmission according to an embodiment of the present invention, because the boss member **110** and the sheave member **120** made of different kinds of metal materials from each other is provided, appropriate materials as desired can be provided respectively at different sites (specifically, the site that has the boss hole **111** and the site that has the sheave surface **121** to receive the belt **43**) of the sheave **100**. Because the sheave member **120** is mounted to the attachment region **AR** being a part of the outer peripheral surface **110os** of the boss member **110** via plastic flow coupling, even though the sheave member **120** and the boss member **110** are made of different kinds of metal materials from each other, joining can be achieved relatively simply, with a high positional accuracy, and compactly (i.e., without causing a layout enlargement).

Moreover, in the production method according to an embodiment of the present invention, the attachment region **AR** being a part of the outer peripheral surface **110os** of the boss member **110** has a stepped shape that includes the first region **R1** having a relatively small diameter, the second region **R2** having a relatively large diameter, and the step surface **SS1** located at the boundary between the first region **R1** and the second region **R2**, such that the first region **R1**, the step surface **SS1,** and the second region **R2** are disposed in this order along the direction of relative movement (first direction **D1**) of the sheave member **120** in step (C). Furthermore, in step (C), a part of the sheave member **120** abuts with the step surface **SS1** of the boss member **110** to undergo plastic deformation, whereby plastic flow coupling is effected. Because the sheave member **120** abuts with the step surface **SS1** of the boss member **110** even in a completed state of the sheave **100**, disengagement of the sheave member **120** that may be caused by a force applied by the belt **43** during the operation of the continuously variable transmission **15** is prevented. In other words, not only does the step surface **SS1** cause plastic deformation of the sheave member **120** during plastic flow coupling, but it also serves as a disengagement prevention for the sheave member **120** in the resultant sheave **100**.

In one embodiment, the first region **R1** of the attachment region **AR** of the boss member **110** has a plurality of grooves **112**, and in step (C), a plurality of projecting ribs **124** to fit in the plurality of grooves **112** are formed in the sheave member **120**.

In the production method according to an embodiment of the present invention, for example, the first region **R1** of the attachment region **AR** of the boss member **110** has a plurality of grooves **112**, and in step (C), a plurality of projecting ribs **124** to fit in the plurality of grooves **112** are formed in the sheave member **120,** thereby effecting mechanical joining. The plurality of projecting ribs **124** of the sheave member **120** are formed as the sheave member **120** abuts with the step surface **SS1** of the boss member **110**, causing the sheave member **120** to undergo plastic deformation (or more specifically, causing the metal material of the sheave member **120** to undergo plastic flow and flow into the grooves **112** of the boss member **110**).

In one embodiment, in step (C), given an intrusion length **L** being defined as an amount of relative movement of the sheave member **120** from a time **T1** at which a part of the sheave member **120** makes initial contact with the step surface **SS1** to a time **T2** at which the relative movement of the sheave member **120** with respect to the boss member **110** is completed, and given a step height **D** being defined as a radial length of the step surface **SS1**, a ratio L/D of the intrusion length **L** to the step height **D** is 1.9 or greater.

As the length (i.e., length along the axial direction of the boss hole **111**) of the portion of the attachment region **AR** of the boss member **110** that actually contributes to joining (i.e., joining portion **JP**) increases, the joint strength becomes more improved. From the standpoint of suitably causing a plastic flow of the metal material of the sheave member **120** throughout an entire joining portion **JP** having a large length along the axial direction, it is preferable that a ratio L/D of the intrusion length **L** to the step height **D** is 1.9 or greater.

In one embodiment, step (C) is carried out by, while the boss member **110** is supported by a first supporting fixture **210**, pressurizing the sheave member **120** in the first direction **D1** with a pressurizing fixture **220**; and in step (C), as the pressurizing fixture **220** abuts with the first supporting fixture **210**, movement of the sheave member **120** is completed.

Step (C) is carried out by, for example, while the boss member **110** is supported by the first supporting fixture **210**, by pressurizing the sheave member **120** in the first direction **D1** with the pressurizing fixture **220**. In that case, it is preferable that, during step (C), movement of the sheave member **120** is completed as the pressurizing fixture **220** abuts with the first supporting fixture **210**. This makes it easy to maintain a constant amount of movement (intrusion length **L**) of the sheave member **120**.

In one embodiment, step (C) is carried out while the rear surface **122** of the sheave member **120** is elastically supported by a second supporting fixture **230**.

It is preferable that step (C) is carried out while the rear surface **122** of the sheave member **120** is elastically supported by the second supporting fixture **230**. As a result, unintended deformation of the sheave member **120** can be restrained.

In one embodiment, step (C) is carried out while a center alignment fixture **240** is placed so as to abut with both of the inner peripheral surface **110is** of the boss member **110** and the inner peripheral surface **120is** of the sheave member **120**.

It is preferable that step (C) is carried out while a center alignment fixture **240** is placed so as to abut with both of an inner peripheral surface **110is** of the boss member **110** and an inner peripheral surface **120is** of the sheave member **120.** As a result, it is easily ensured that the axis center of the boss member **110** coincides with the axis center of the sheave member **120**.

### INDUSTRIAL APPLICABILITY

According to embodiments of the present invention, suitable structures and production methods for composing a movable sheave for a continuously variable transmission, from multiple components that are made of different kinds of materials, can be provided. A sheave for a continuously variable transmission according to an embodiment of the present invention is broadly used in the continuously variable transmission for various types of straddled vehicles.

### REFERENCE SIGNS LIST

**1**: motorcycle, **15**: continuously variable transmission, **22**: crankshaft, **41**: primary pulley, **42**: secondary pulley, **43**: belt, **44**: sheave driving mechanism, **100**: sheave (first movable sheave), **110**: boss member, **111**: boss hole, **112**: groove, **112A**: first groove, **112B**: second groove, **120**: sheave member, **121**: sheave surface, **122**: rear surface, **123**: fin, **124**: projecting ribs, **AR**: attachment region, **R1**: first region, **R2**: second region: **SS1**: step surface (first step surface), **JP**: joining portion

## Claims

1. A sheave for a continuously variable transmission, comprising:
a boss member being made of a first metal material and having a boss hole; and
a sheave member that is made of a second metal material which is a different kind from the first metal material, the sheave member including a sheave surface to receive a belt and a rear surface that is located on an opposite side to the sheave surface, wherein:
the sheave member is mounted on an attachment region being a part of the outer peripheral surface of the boss member via plastic flow coupling;
the attachment region has a stepped shape that includes a first region having a relatively small diameter, a second region having a relatively large diameter, and a step surface located at a boundary between the first region and the second region; and
the first region, the step surface and the second region are disposed in this order from the sheave surface side toward the rear surface side, and the sheave member abuts with the step surface.

2. The sheave for a continuously variable transmission of claim 1, wherein:
the first region of the attachment region of the boss member has a plurality of grooves; and
the sheave member has a plurality of projecting ribs fitting in the plurality of grooves.

3. The sheave for a continuously variable transmission of claim 2, wherein a gap is provided between a bottom of each of the plurality of grooves and a top of a projecting rib fitting in the groove.

4. The sheave for a continuously variable transmission of claim 2 or 3, wherein the plurality of grooves include two first grooves extending along a circumferential direction of the boss member and a plurality of second grooves being located between the two first grooves and extending along an axial direction of the boss member.

5. The sheave for a continuously variable transmission of claim 4, wherein a length of each of the plurality of second grooves is 3 mm or greater.

6. The sheave for a continuously variable transmission of claim 4 or 5, wherein a depth of each of the plurality of second grooves is 2 mm or smaller.

7. The sheave for a continuously variable transmission of any of claims 4 to 6, wherein a ratio of the length to the depth of each of the plurality of second grooves is 5 or greater.

8. The sheave for a continuously variable transmission of any of claims 4 to 7, wherein:
the plurality of second grooves are disposed so that essentially no interspace exists between two adjacent second grooves; and
a peak portion that is defined between the two adjacent second grooves has a radius of curvature of 0.5 mm or smaller.

9. The sheave for a continuously variable transmission of any of claims 4 to 8, wherein a tilting angle of a side surface of each of the plurality of second grooves with respect to a depth direction is not less than 30° and not more than 60°.

10. The sheave for a continuously variable transmission of any of claims 4 to 9, wherein a bottom of each of the plurality of second grooves has a radius of curvature of 0.5 mm or smaller.

11. The sheave for a continuously variable transmission of any of claims 4 to 10, wherein a depth of each of the plurality of first grooves is 2 mm or smaller.

12. The sheave for a continuously variable transmission of any of claims 2 to 11, wherein:
an inner peripheral surface of the boss member includes a spline region in which spline structures are formed;
a joining portion is defined as a region of the attachment region where the plurality of grooves are formed; and
clearance regarding an axial direction of the boss member is provided between the joining portion and the spline region.

13. The sheave for a continuously variable transmission of claim 12, wherein:
the spline region includes a first spline portion having a first spline minor diameter and a second spline portion having a second spline minor diameter which is greater than the first spline minor diameter; and
the second spline portion is disposed closer to the joining portion than is the first spline portion.

14. The sheave for a continuously variable transmission of any of claims 2 to 13, wherein:
the first region of the attachment region includes a first press-fit portion in which the sheave member is press-fitted;
the second region of the attachment region includes a second press-fit portion in which the sheave member is press-fitted; and
a length of the second press-fit portion along an axial direction of the boss member is greater than a length of the first press-fit portion along the axial direction of the boss member.

15. The sheave for a continuously variable transmission of any of claims 1 to 14, wherein the rear surface of the sheave member includes a plurality of fins.

16. The sheave for a continuously variable transmission of any of claims 1 to 15, wherein:
the first metal material is an iron alloy; and
the second metal material is an aluminum alloy.

17. A continuously variable transmission comprising:
a rotation shaft; and
a movable sheave supported by the rotation shaft so as to be capable of sliding along an axial direction of the rotation shaft, wherein
the movable sheave is the sheave for a continuously variable transmission of any of claims 1 to 16.

18. A straddled vehicle comprising the continuously variable transmission of claim 17.

19. A production method of a sheave for a continuously variable transmission, comprising:
step (A) of providing a boss member being made of a first metal material and having a boss hole;
step (B) of providing a sheave member that is made of a second metal material which is a different kind from the first metal material, the sheave member including a sheave surface to receive a belt and a rear surface that is located on an opposite side to the sheave surface; and
step (C) of mounting the sheave member to an attachment region being a part of an outer peripheral surface of the boss member via plastic flow coupling, wherein:
a direction being parallel to an axial direction of the boss member and going from one end to another end of the boss member is defined as a first direction;
step (C) is carried out by pressurizing the sheave member and/or the boss member to cause a relative movement of the sheave member with respect to the boss member in the first direction;
the attachment region of the boss member has a stepped shape that includes a first region having a relatively small diameter, a second region having a relatively large diameter, and a step surface located at a boundary between the first region and the second region;
the first region, the step surface and the second region are disposed in this order along the first direction; and,
in step (C), a part of the sheave member abuts with the step surface of the boss member to undergo plastic deformation, whereby the plastic flow coupling is effected.

20. The production method of claim 19, wherein:
the first region of the attachment region of the boss member has a plurality of grooves; and
in step (C), a plurality of projecting ribs to fit in the plurality of grooves are formed in the sheave member.

21. The production method of claim 19 or 20, wherein:
in step (C), given an intrusion length L being defined as an amount of relative movement of the sheave member from a point in time at which a part of the sheave member makes initial contact with the step surface to a point in time at which the relative movement of the sheave member with respect to the boss member is completed, and
given a step height D being defined as a radial length of the step surface,
a ratio L/D of the intrusion length L to the step height D is 1.9 or greater.

22. The production method of any of claims 19 to 21, wherein:
step (C) is carried out by, while the boss member is supported by a first supporting fixture, pressurizing the sheave member in the first direction with a pressurizing fixture; and
in step (C), as the pressurizing fixture abuts with the first supporting fixture, movement of the sheave member is completed.

23. The production method of claim 22, wherein step (C) is carried out while the rear surface of the sheave member is elastically supported by a second supporting fixture.

24. The production method of any of claims 19 to 23, wherein step (C) is carried out while a center alignment fixture is placed so as to abut with both of an inner peripheral surface of the boss member and an inner peripheral surface of the sheave member.
